# EUROPEAN PATENT APPLICATION

(11) **EP 2 685 735 A1**
(43) Date of publication of application: **15.01.2014**
(21) Application number: 13175877.3
(22) Date of filing: 10.07.2013
(51) Int. Cl.: H04N 13/04

(54) **Image display method and menu display method**

(30) Priority: 10.07.2012 KR 20120075194
(71) Applicant: Samsung Electronics Co., Ltd, Gyeonggi-do 443-742 (KR)
(72) Inventor: Park, Jae-sung, Seoul (KR); Song, Myoung-jong, Gyeonggi-do (KR)
(74) Representative: Walaski, Jan Filip

(57) **Abstract**

An image display method include selecting a mode from among a single two-dimensional 2D mode, a multi 2D mode, and a three-dimensional 3D mode, displaying an image frame of a first 2D content if the single 2D mode is selected; combining the respective image frames of each of a plurality of 2D contents and alternately displaying the respective image frames of each of the plurality of 2D contents if the multi 2D mode is selected; and alternately displaying a left-eye image frame and a right-eye image frame of a first 3D content if the 3D mode is selected.

## Description

The present invention relates to displaying a setting menu of an image display apparatus, and more particularly, to an image display apparatus which outputs an image in at least one of a two-dimensional (2D) mode and a three-dimensional (3D) mode and a menu display method thereof.

Various electronic apparatuses are being developed and distributed by using advanced digital technologies. In particular, the display apparatuses such as televisions (TVs), mobile phones, personal computers (PCs), notebook PCs, personal digital assistants (PDAs), and others are widely utilized at homes and places of business.

As the utilization of the display apparatuses increases, user requirements for more various functions are also increasing. The electronic manufacturers focus their efforts on meeting the customer's needs, and the display apparatuses which include newer functions that had not previously been available are rapidly introduced.

In particular, the demand for sharing one display apparatus to enable viewing of different contents among a plurality of users is higher than ever. Further, the 3D image display technology for providing the illusion of depth with a more realistic effect has been introduced.

In a display apparatus that enables one user to watch a 2D image and the 3D image alternately or enables a plurality of users to watch a plurality of 2D images or 3D images, when a conversion occurs between the 2D mode and the 3D mode, methodologies for displaying a menu are necessary, because the respective modes require different viewing environments from each other and thus it is necessary to perform a setup process to suit the user.

Exemplary embodiments overcome the above disadvantages and other disadvantages not described above.

According to an aspect of an exemplary embodiment, there is provided an image display apparatus for processing an image displayed on a display, which may include a signal processor which constructs an image frame for at least one of a 2D content and a 3D content, an output unit which outputs the constructed image frame, an interface which receives an instruction for selecting an operating mode, and a controller which controls the apparatus to perform at least one operation in at least one of a single 2D mode for displaying the image frame of a first 2D content which is output from the output unit on the display, a multi 2D mode for combining respective image frames of each of a plurality of 2D contents which are output from the output unit on the display, and a 3D mode for alternately displaying a left-eye image frame and a right-eye image frame of a first 3D content which is output from the output unit on the display.

The controller may control the apparatus so that a setting menu user interface (UI) which includes a settable menu is displayed, and the instruction for selecting one of the single 2D mode, the multi 2D mode, and the 3D mode as the operating mode is received via the menu setting UI.

The controller may control the apparatus so that a plurality of menus which respectively correspond to the plurality of 2D contents in which relate to the multi 2D mode are displayed on a predetermined area of a screen. Each menu may correspond to each of the 2D content being displayed in the multi 2D mode.

The controller may control the apparatus so that the plurality of menus are arranged in at least one of a Picture in Picture (PIP) format, a vertical direction, and a horizontal direction.

When the plurality of menus which respectively correspond to the plurality of 2D contents are displayed on the predetermined area of the screen, the controller may control the apparatus so that at least one of an image frame of one of a plurality of 2D contents is displayed in the single 2D mode and respective image frames of each of the plurality of 2D contents are displayed on the predetermined area of the screen.

One of the plurality of menus may include a menu which includes an item relating to determining whether the image frame of the first 2D content is displayed in a same setting in the single 2D mode.

The controller may control the apparatus so that a menu which corresponds to a first one of a plurality of 2D contents is displayed in the multi 2D mode, and a menu which corresponds to a second one of a plurality of 2D contents is displayed if a menu switch is received via the interface.

The setting menu UI may include a setting menu UI relating to the 3D mode and an item relating to setting a formatting method relating to each of the left-eye image frame and the right-eye image frame of the first 3D content.

The setting menu UI may include a source selection menu which includes an item relating to determining a source of the at least one content.

The controller may control the apparatus so that a menu which corresponds to the source which is determined via the source selection menu is displayed.

If the multi 2D mode is used, the controller may control the apparatus so that at least one respective menu which corresponds to each respective one of the plurality of 2D contents is displayed at a displaying timing of the combined image frames of the plurality of 2D contents.

The controller may control the apparatus so that a notice message which includes information relating to advising a viewer to wear glasses is displayed at the displaying timing of the combined image frames of the plurality of 2D contents.

If the 3D mode is used, the controller may control the apparatus so that at least one menu which corresponds to the 3D mode is displayed at a respective displaying timing of each of the left-eye image frame and the right-eye image frame of the first 3D content.

If the multi 2D mode and the single 2D mode are used, the controller may control the apparatus so that a menu is displayed, which menu includes an item relating to determining whether any one of a plurality of 2D contents is displayed in the multi 2D mode in a same setting as in the single 2D mode at a displaying timing of any one of the plurality of 2D contents.

If one of the single 2D mode and the 3D mode is used in conjunction with the multi 2D mode, the controller may control the apparatus so that a menu which includes an item relating to selecting any one of a plurality of 2D contents displayed in the multi 2D mode is displayed.

The controller may receive, from a remote controller, at least one of a first remote controller signal for changing the operating mode to the single 2D mode, a second remote controller signal for changing the operating mode to the multi 2D mode, and a third remote controller signal for changing the operating mode to the 3D mode, and the controller may control the apparatus so that a viewer setting UI is displayed in a format which corresponds to the received remote controller signal from among the first, second, and third remote controller signals, and the controller may select one of the single 2D mode, the multi 2D mode, and the 3D mode by utilizing setting information received via the viewer setting UI.

The controller may control the apparatus so that a hotkey UI which includes a first menu, a second menu and a third menu is displayed in order to facilitate a selection of any one of the first, second, and third menus, in which the first menu includes at least one item relating to changing the operating mode to the single 2D mode, the second menu includes at least one item relating to changing the operating mode to the multi 2D mode, and the third menu includes at least one item relating to changing the operating mode to the 3D mode.

If one of the first menu, the second menu, and the third menu is selected via the hotkey UI, the controller may control the apparatus so that at least one menu which corresponds to a display mode of the contents is displayed on a predetermined area of the screen.

According to an aspect of another exemplary embodiment, there is provided an image display method which may include selecting a mode from among a single 2D mode, a multi 2D mode, and a 3D mode, and displaying an image frame of a first 2D content if the single 2D mode is selected, combining respective image frames of each of a plurality of 2D contents and displaying a multi view frame if the multi 2D mode is selected, and alternately displaying a left-eye image frame and a right-eye image frame of a first 3D content if the 3D mode is selected.

The selecting may include displaying a setting menu UI which includes a settable menu, and receiving an instruction for selecting one of the single 2D mode, the multi 2D mode, and the 3D mode as the operating mode via the menu setting UI.

The displaying the setting menu UI may include displaying a plurality of menus which respectively correspond to the plurality of 2D contents which relate to the multi 2D mode on a predetermined area of a screen.

The plurality of menus may be arranged in at least one of a Picture in Picture (PIP) format, a vertical direction, and a horizontal direction.

The method may further include displaying, when the plurality of menus which respectively correspond to the plurality of 2D contents are displayed on the predetermined area of the screen, at least one of an image frame of one of a plurality of 2D contents in the single 2D mode and respective image frames of each of the plurality of 2D contents on the predetermined area of the screen.

One of the plurality of menus may include a menu which includes an item relating to determining whether the image frame of the first 2D content is displayed in a same setting in the single 2D mode.

The displaying the menu setting UI may include displaying a menu which corresponds to a first one of a plurality of 2D contents in the multi 2D mode, and displaying a menu which corresponds to a second one of a plurality of 2D contents if a menu switch is received.

The menu setting UI may include a menu setting UI relating to the 3D mode and an item relating to setting a formatting method relating to each of the left-eye image frame and the right-eye image frame of the first 3D content.

The menu setting UI may include a source selection menu which includes an item relating to determining a source of the at least one content.
The image display method may additionally include displaying a menu which corresponds to the source which is determined via the source selection menu.

If the multi 2D mode is selected, the method may further include displaying at least one menu which corresponds to each respective one of the plurality of 2D contents at a displaying timing of the combined image frames of the plurality of 2D contents.

The image display method may further include displaying a notice message which includes information relating to advising a viewer to wear glasses at the displaying timing of the combined image frames of the plurality of 2D contents.

If the 3D mode is selected, the method may further include displaying at least one menu which corresponds to the 3D mode at a respective displaying timing of each of the left-eye image frame and the right-eye image frame of the first 3D content.

If the multi 2D mode and the single 2D mode are selected, the method may further include displaying a menu which includes an item relating to determining whether any one of a plurality of 2D contents is displayed in the multi 2D mode in a same setting as in the single 2D mode at a displaying timing of any one of the plurality of 2D contents.

If one of the single 2D mode and the 3D mode is selected in conjunction with the multi 2D mode, the method may further include displaying a menu which includes an item relating to selecting any one of a plurality of 2D contents which is displayed in the multi 2D mode.

The selecting may include receiving, from a remote controller, at least one of a first remote controller signal for changing the operating mode to the single 2D mode, a second remote controller signal for changing the operating mode to the multi 2D mode, and a third remote controller signal for changing the operating mode to the 3D mode, displaying a viewer setting UI in a format which corresponds to the received remote controller signal from among the first, second, and third remote controller signals, and selecting one of the single 2D mode, the multi 2D mode, and the 3D mode by utilizing setting information received via the viewer setting UI.

The selecting may include displaying a hotkey UI which includes a first menu, a second menu and a third menu, in which the first menu includes at least one item relating to changing the operating mode to the single 2D mode, the second menu includes at least one item relating to changing the operating mode to the multi 2D mode, and the third menu includes at least one item relating to changing the operating mode to the 3D mode, and receiving a selection of at least one of the first, second, and third menus via the hotkey UI.

If one of the first menu, the second menu, and the third menu is selected via the hotkey UI, the method may additionally include displaying at least one menu which corresponds to a display mode of the contents on a predetermined area of the screen.

In various exemplary embodiments, it is possible to output images based on one or more of a single 2D mode, a multi 2D mode, and a 3D mode, and to display a menu setting UI which includes menus which are settable with respect to the respective modes so that images are outputted based on the setting information.

The above and/or other aspects will be more apparent by illustrating certain exemplary embodiments with reference to the accompanying drawings, in which:
FIGS. 1 and 2 are conceptive illustrations of a contents providing system according to an exemplary embodiment;
FIGS. 3 and 4 are diagrams which illustrate a synchronous signal transmitting method according to an exemplary embodiment;
FIG. 5 is a block diagram of an image display apparatus according to an exemplary embodiment;
FIGS. 6 and 7 are detailed block diagrams of an image display apparatus according to an exemplary embodiment;
FIG. 8 is a block diagram which illustrates a circuit of the output unit according to an exemplary embodiment;
FIG. 9 is a block diagram of a circuit of the display panel according to an exemplary embodiment;
FIG. 10 illustrates a display screen of the menu setting UI according to an exemplary embodiment;
FIGS. 11, 12, and 13 illustrate a menu screen of the image display apparatus according to an exemplary embodiment;
FIG. 14 illustrates a screen displaying the image shown in FIGS. 11, 12, and 13 according to an exemplary embodiment;
FIG. 15 illustrates a screen displaying a menu inquiring about whether a channel selection in a multi 2D mode is the same as in a single 2D mode according to an exemplary embodiment;
FIG. 16 illustrates a menu displaying a screen which is produced by performing a switching method according to an exemplary embodiment;
FIG. 17 illustrates a source selecting menu according to an exemplary embodiment;
FIG. 18 illustrates a channel menu screen in a multi 2D mode according to an exemplary embodiment;
FIG. 19 illustrates a screen which includes a message providing notice to wear glasses while converting from a single 2D mode to a multi 2D mode according to an exemplary embodiment;
FIG. 20 illustrates a screen displaying a menu inquiring about contents selection according to an exemplary embodiment;
FIG. 21 is a conceptive view which illustrates buttons of a remote controller 300 according to an exemplary embodiment;
FIG. 22 illustrates a hotkey UI displaying screen according to an exemplary embodiment;
FIGS. 23, 24, 25, 26, 27, 28, 29, 30, 31, and 32 are flowcharts which illustrate a menu display method according to an exemplary embodiment;
FIG. 33 is a block diagram of glasses according to an exemplary embodiment; and
FIG. 34 illustrates glasses which include buttons according to an exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. Accordingly, it is apparent that the exemplary embodiments can be practiced without those specifically defined matters. In addition, well-known functions or constructions are not described in detail since they would obscure the present disclosure with unnecessary detail.

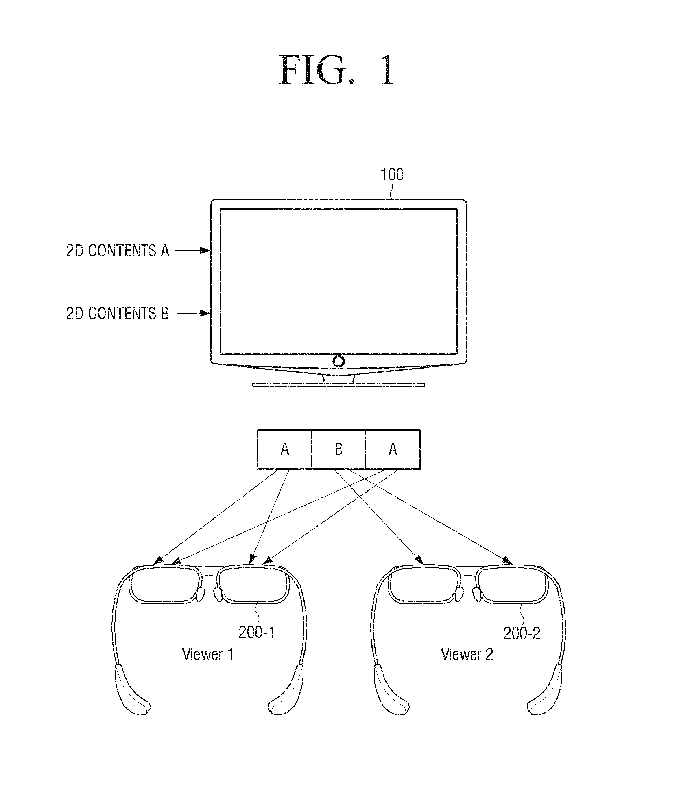

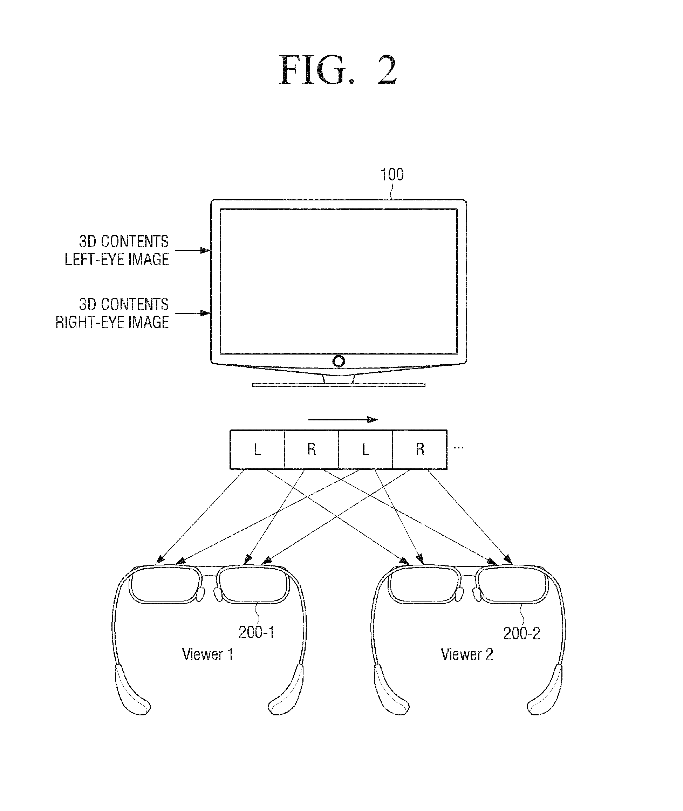

FIGS. 1 and 2 are conceptive views which illustrate a system for providing contents according to an exemplary embodiment. Referring to FIGS. 1 and 2, the contents providing system 100 may include an image display apparatus 100 and glasses 200.

The image display apparatus 100 may display 2D contents and/or 3D contents, depending on a display mode. The image display apparatus 100 may operate in any of a single 2D mode for displaying an image frame of a single 2D content on the display, a multi 2D mode for combining a plurality of image frames of a respective plurality of 2D contents and displaying the multi view image frames on the display, and a 3D mode for alternately displaying left-eye image frames and right-eye image frames of at least one 3D content on the display.

The term "3D contents" as used herein may refer to contents which provide an illusion of depth to the user by utilizing the multi perspective image showing the object from the different viewpoints to each other. In other words, it includes stereoscopic images. The term "2D contents" as used herein may indicate contents having respective image frames showing an object from a single viewpoint. The 3D contents include depth information which represents the degree of the illusion of depth.

The contents may be previously manufactured and include, for example, one or more of Video On Demand (VoD) contents, premium VoD contents, broadcasting contents, internet contents, local files, exterior contents connected to the Digital Living Network Alliance (DLNA) network, or others, but not limited thereto. Accordingly, recorded broadcasting contents or real-time broadcasting contents may also be processed and displayed.

The image display apparatus 100 in the single 2D mode may output the image frames included in a single set of 2D contents consecutively and display the same on the display. The term "output consecutively" as used herein may indicate that the image frames forming the contents are displayed in series at predetermined intervals on the display. Although not illustrated herein, for instance, if the image frames of the 2D contents include A, B, C, D, ... , Z, the image display apparatus 100 may display A, B, C, D, ... , Z at predetermined intervals.

Further, in the multi 2D mode, the image display apparatus 100 may combine a plurality of image frames of the 2D contents and display the multi view frames alternately on the display. The term "display alternately" may indicate that the image frame of a first set of contents is displayed first, another image frame of a second set of contents is displayed next, and so on, which means that the respective image frames of the different sets of contents are displayed in turn. For instance, if the image frames of a first set of contents are A, B, C, D, ... , Z, and if the image frames of a second set of contents are a, b, c, d, ... , z, the image frames may be displayed in the order of A, a, B, b, C, c, ... , Z, z. In effect, image frames from different contents are alternately displayed on the display.

Further, in the 3D mode, the left-eye image frame and the right-eye image frame which are obtained from the 3D contents may be outputted alternately to be displayed on the display. Similarly as described above with respect to the multi 2D mode, the left-eye image frame of the 3D contents may be displayed first, and the right-eye image frame of the 3D contents may be displayed next. For instance, if the image frames of the contents are A, B, C, D, ... , Z, the left-eye image frames are A', B', C', D', ... , Z' and the right-eye image frames are A", B", C", D", ... , Z", the image frames may be displayed in the order of A', A", B', B", C', C", D', D", ... , Z', Z".

FIG. 1 illustrates a multi 2D mode for alternately displaying a plurality of 2D contents.

Referring to FIG. 1, the image display apparatus 100 may alternately display a plurality of 2D contents (Contents A, Contents B), generate synchronous signals for synchronizing Glasses 1200-1 and Glasses 2 200-2, and transmit the synchronous signals to Glasses 1 200-1 and Glasses 2 200-2.

While displaying Contents A based on the synchronous signals, Glasses 1 200-1 may open both of the left-eye shutter glass and the right-eye shutter glass. While displaying Contents B, Glasses 1 200-1 may close both the left-eye shutter glass and the right-eye shutter glass. In effect, the glasses are synchronized such that whilst the left- and right-eye shutter glasses of one pair of glasses are open, the left- and right-eye shutter glasses of another pair of glasses are closed. When the left- and right-eye shutter glasses of one pair of glasses are closed, the left- and right-eye shutter glasses of another pair of glasses are synchronized to be open. Thus, Viewer 1, who is wearing Glasses 1 200-1, may watch only one set of contents (i.e., Contents A) that is synchronized with Glasses 1 200-1 from among a plurality of contents (Contents A, Contents B). Likewise, Viewer 2, who is wearing Glasses 2 200-2, may watch Contents B. Because alternately displaying the image frames of the respective sets of 2D contents may be performed at a relatively high speed, the afterimage effects of the retina are kept while closing the lens, so that the viewer may perceive the image sequence without detecting the alternating.

FIG. 2 illustrates a method for providing one 3D contents in the 3D mode according to an exemplary embodiment.

Referring to FIG. 2, the 3D contents may be displayed by alternately displaying the left-eye image frame L and the right-eye image frame R.

According to the synchronous signals, Glasses 1 200-1 and Glasses 2 200-2 may open the left-eye shutter glass when the left-eye image frame of the 3D contents is displayed, and open the right-eye shutter glass when the right-eye image frame of the 3D contents is displayed. Because the right-eye image frame and the left-eye image frame may have a predetermined time gap and the alternately displaying may be performed at a relatively high speed, the afterimage effects of the retina are kept while the lens is closed, so that the viewers wearing Glasses 1 200-1 and Glasses 2 200-2 each may perceive the 3D image as a natural sequence.

The image display apparatus 100 according to various exemplary embodiments may be installed one or more of various types of displays, such as, for example, the TV, the mobile phone, the PDA, the notebook PC, the monitor, the tablet PC, the electronic book, the electronic frame, the kiosk, the flexible display, or the Head Mounted Display (HMD).

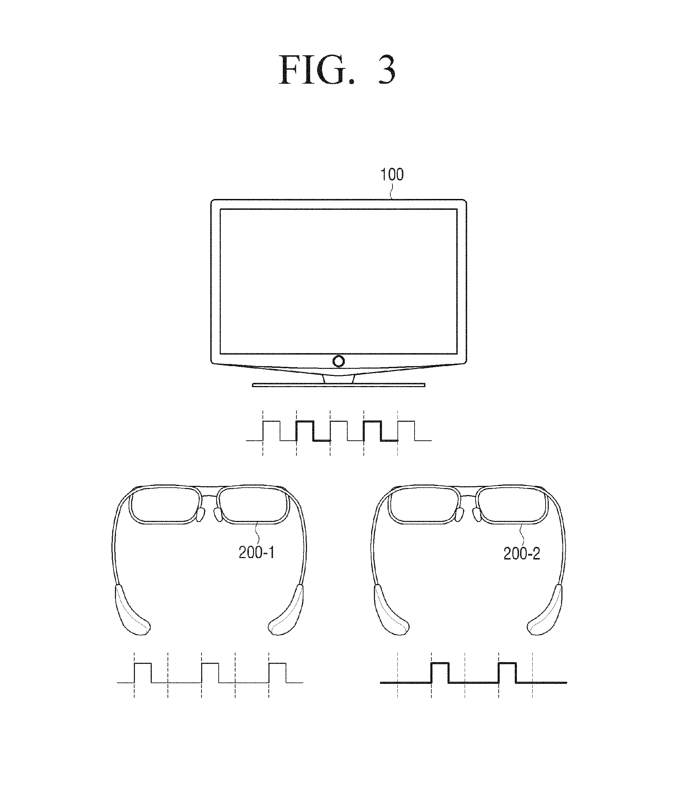

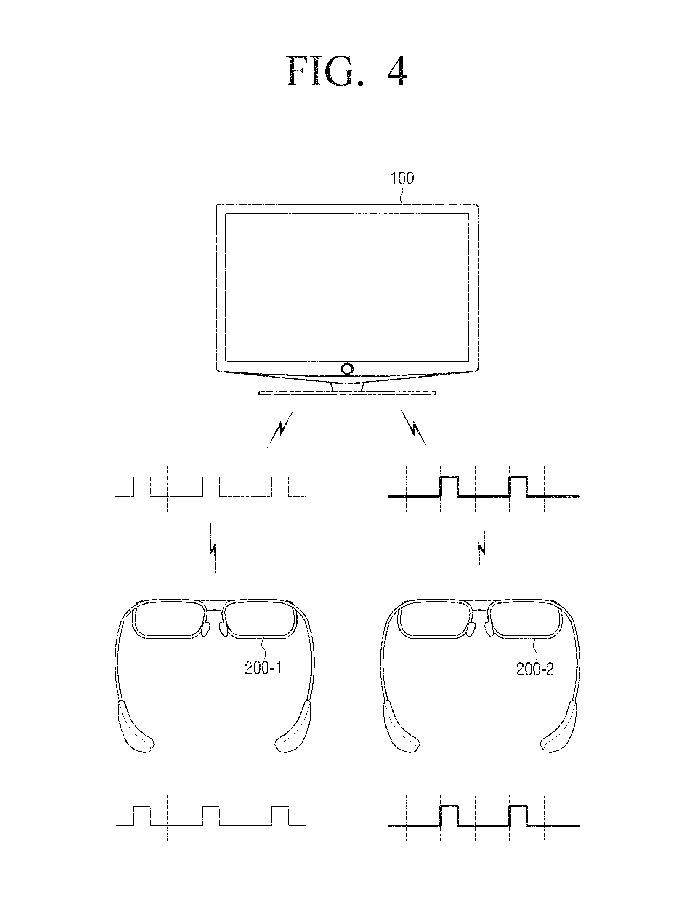

FIGS. 3 and 4 are diagrams which illustrate a method for transmitting the synchronous signals according to an exemplary embodiment.

Referring to FIG. 3, the image display apparatus 100 may broadcast or multicast one group of signals by multiplexing the synchronous signals in correspondence with Glasses 1 200-1 and Glasses 2 200-2. Glasses 1 200-1 and Glasses 2 200-2 may be synchronized with the synchronous signals based on a viewer's instruction (e.g., an instruction to change channels), and operate to open or close the shutter glasses accordingly.

However, this is merely one of the exemplary embodiments. Referring to FIG. 4, the image display apparatus 100 may transmit a first set of synchronous signals which corresponds to Glasses 1 200-1 and a second set of synchronous signals which corresponds to Glasses 2 200-2 to each of the corresponding glasses (Glasses 1 200-2 and Glasses 2 200-2) so that Glasses 1 200-1 and Glasses 2 200-2 may receive the corresponding synchronous signals.

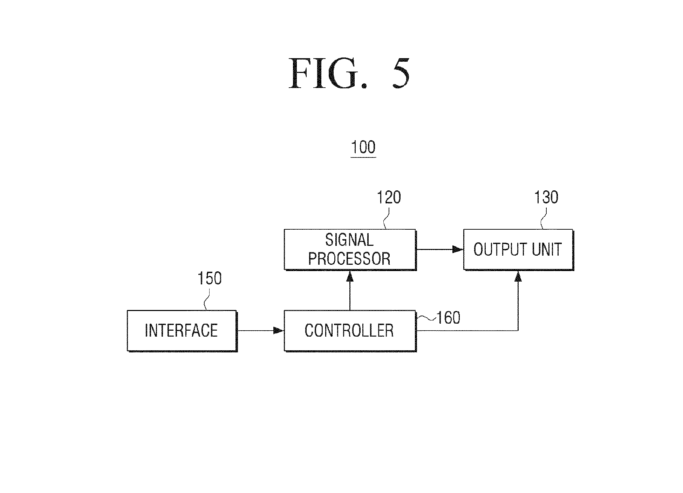

Further, the synchronizing signals may include radio frequency (RF) signals or infrared (IR) signals, which will be further described below. FIG. 5 is a block diagram which illustrates an image display apparatus 100 according to an exemplary embodiment.

Referring to FIG. 5, the image display apparatus 100 may include a signal processor 120, an output unit 130, an interface 150, and a controller 160.

The signal processor 120 may construct the image frame of the 2D contents or the 3D contents and process various signals of the received contents. The implementation of the signal processor 120 in each mode will be described below.

In the single 2D mode, the signal processor 120 may constitute a sequence of image frames of one set of 2D contents consecutively in the same order as the displaying order.

In the multi 2D mode, the signal processor 120 may alternately constitute the respective image frames of a plurality of sets of 2D contents.

In the 3D mode, the signal processor 120 may alternately constitute the left-eye image frame and the right-eye image frame of one set of 3D contents.

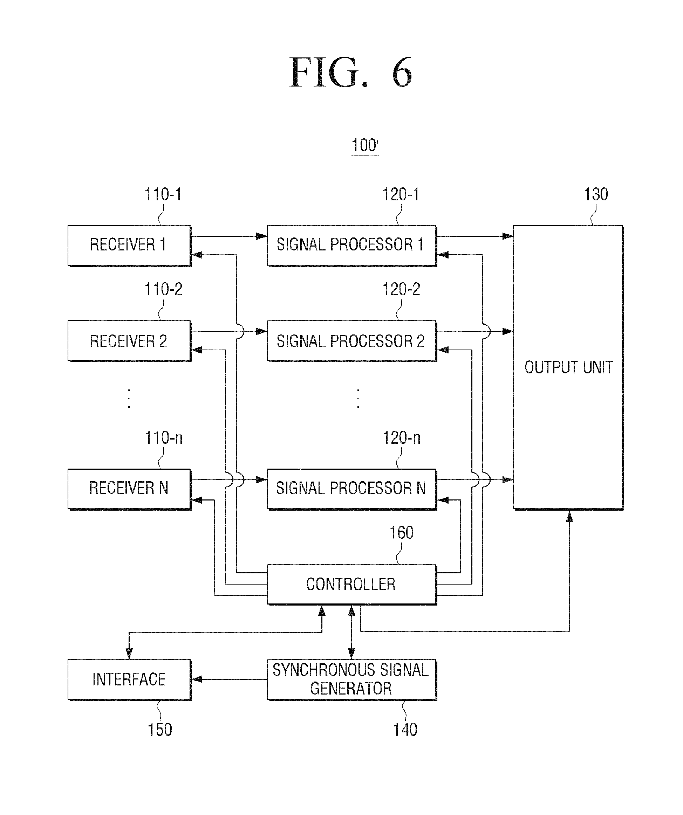

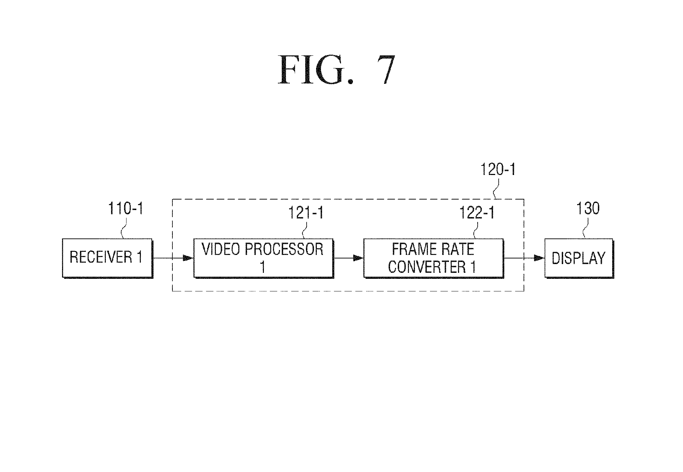

Referring to the exemplary embodiment illustrated in FIG. 6, which will be described below, a plurality of signal processors 120-1, 120-2, ... , 120-n may be included. A plurality of receivers 110-1, 110-2, ... , 110-n of FIG. 7 may receive the various signals and output the received contents. A plurality of signal processors 120-1, 120-2, ... , 120-n may process the received contents in order to construct a respective image frame format for each received content.

The output unit 130 may output the image frames of the contents constituted at the signal processor 120. Although not illustrated herein, the image frames outputted from the signal processor 120 may be multiplexed by a multiplexer (not illustrated), and the output unit 130 may arrange and output each image frame of the contents based on a selected mode.

In particular, the output unit 130 may consecutively output the image frames of one set of 2D contents in the single 2D mode, alternately output respective image frames of a corresponding plurality of 2D contents in the multi 2D mode, and alternately output the left-eye image frames and the right-eye image frames of one set of 3D contents in the 3D mode.

The output unit 130 may include at least one of the Liquid Crystal Display Panel, the Plasma Display Panel, the Organic Light Emitting Diodes (OLED), the Vacuum Fluorescent Display (VFD), the Field Emission Display (FED), and the Electro Luminescence Display (ELD). The output unit 130 will be further described below.

The interface 150 may receive an instruction, such as, for example, an instruction provided by a viewer. The viewer's instruction may include an instruction for controlling the image display apparatus. The viewer's instruction may be generated and transmitted by the remote controller or the glasses 200.

In particular, the interface 150 may receive the viewer's instruction for selecting the mode. The instruction for selecting the mode may include an instruction for operating the image display apparatus 100 in the single 2D mode, the multi 2D mode, or the 3D mode. The instruction for selecting may be transmitted from the remote controller 300 or from the glasses. This will be further described below. The synchronous signals may be transmitted to the glasses via the interface 150. The method for transmitting or receiving the information may not be limited to the specific technology.

For instance, the interface 150 may communicate with the glasses 200 by utilizing a RF communication module. The RF communication module may be implemented as a Bluetooth communication module. The interface 150 may generate the transport stream to include the synchronous signals according to the Bluetooth communication standard and transmit the stream to the glasses.

The transport stream may be synchronized with the displaying timing of each element within a set of contents and may include time information relating to opening and/or closing the shutter glass of the glasses. In particular, the transport stream may include information relating to each of an offset time for opening the left-eye shutter glass of the glasses in each set of contents at a predetermined time point, an offset time for closing the left-eye shutter glass, an offset time for opening the right-eye shutter glass, and an offset time for closing the right-eye shutter glass. The predetermined time point may indicate the time when the orthogonal synchronous signals may be generated in the image frame of each set of contents. The transport stream may also include time information relating to a time when the orthogonal synchronous signals may be generated.

For instance, in order to communicate by the Bluetooth communication method, the interface 150 may implement a pairing with each glasses. After the pairing is completed, the information relating to the glasses, such as, for instance, the device ID or the device address, may be registered in the interface 150. The interface 150 may match the displaying timing of each contents with the glasses information, and generate the transport stream by the Bluetooth communication method. For instance, the interface 150 may match each set of contents which is associated with a respective glasses information to each other in the order of arrangement of the respective image frames. In the multi view mode (multi 2D mode), if two sets of 2D contents are provided alternately, the image frames of the contents which are arranged in the first, third, ... , nth orders may be matched with the first glasses information, and the image frames of the contents which are arranged in the second, fourth, ... , n+1th orders may be matched with the second glasses information (where n = an odd number). If the synchronous signals are received, the glasses may detect the displaying timing which corresponds to the device information relating to the glasses, and open or close the shutter glass based on the detected displaying timing.

Although the above exemplary embodiment describes that the interface 150 and the glasses 200 may communicate by the Bluetooth communication method, this is merely one exemplary embodiment. Any one or more of other communication methods, such as, for example, infrared communication, the Zigbee, and the near field communication (NFC) communication method, as well as the Bluetooth communication method, may be utilized. By using various wireless communication methods for generating the communication channels in the short distance area and transmitting or receiving the signals, the communication may be performed.

The interface 150 may provide the IR synchronous signals having the different frequencies to the glasses. The glasses may receive the synchronous signals and open or close each respective shutter glass based on the displaying timing of the corresponding contents.

The interface 150 may transmit infrared rectangular wave signals which repeatedly transition between a high level of the first period and a low level of the second period by the predetermined time interval based on the synchronizing information received by the glasses. The glasses may open the shutter glass during the high level of the first period and close the shutter glass during the low level of the second period. Further, the synchronous signals may be generated by using any one or more of various methods.

The controller 160 may control the overall operation of the image display apparatus 100. In particular, the controller 160 may respectively control each of the signal processor 120, the multiplexer (not illustrated), the output unit 130, and the interface 150 to implement corresponding operations. In particular, by the using instruction for selecting the mode from among the single 2D mode, the multi 2D mode, and the 3D mode which is received from the interface 150, the controller 160 may control the output unit 130 to select the mode and to provide an output accordingly. The controller 160 may include, for example, at least one of a microprocessor, an integrated circuit (IC) chip, a central processing unit (CPU), and/or a microprocessor unit (MPU) with regard to the hardware aspect, and include an operating system (OS) and one or more applications with regard to the software aspect.

FIGS. 6 and 7 are block diagrams which illustrate a detailed constitution of an image display apparatus according to an exemplary embodiment.

FIG. 6 is a block diagram which illustrates an image display apparatus 100 according to an exemplary embodiment. Referring to FIG. 6, the image display apparatus 100 may include a plurality of receivers 110-1, 110-2, ... , 110-n, a plurality of signal processors 120-1, 120-2, ... , 120-n, an output unit 130, a synchronous signal generator 140, an interface 150, and a controller 160.

Because the signal processor 120, the output unit 130, the interface 150, and the controller 160 are described above, the receiver 110 and the synchronous signal generator 140 will be additionally described below.

A plurality of receivers 110-1, 110-2, ... , 110-n may receive different respective contents from each other. In particular, the receivers 110-1, 110-2, ... , 110-n may receive the contents from a broadcasting station which transmits broadcasting program contents via a broadcasting network or from a web server which transmits contents files via the internet. Further, receivers 110-1, 110-2, ... , 110-n may receive the contents from various recording medium playing apparatuses which are installed within the image display apparatus 100 or connected to the image display apparatus 100. The term "recording medium playing apparatus" as used herein may indicate an apparatus which is usable for playing the contents stored in the various types of the recording media, such as, for example, the compact disk (CD), the digital versatile disk (DVD), the hard disk, the blu-ray disk, the memory card, or the Universal Serial Bus (USB) memory.

If the contents are received from the broadcasting station, at least one of the plurality of receivers 110-1, 110-2, ... , 110-n may include a tuner (not illustrated), a demodulator (not illustrated), and an equalizer (not illustrated). Further, if the contents are received from the sources such as the web server, at least one of the plurality of receivers 110-1, 110-2, ... , 110-n may include a network interface card (not illustrated). If the contents are received from the various types of the recording medium playing apparatuses, at least one of the plurality of receivers 110-1, 110-2, ... , 110-n may include interfaces (not illustrated) which are connected to the recording medium playing apparatus. For instance, the interface may include at least one of an audio-video (AV) socket, a COMP socket, or a HDMI socket. Further, the plurality of receivers 110-1, 110-2, ... , 110-n may be implemented variously depending on exemplary embodiments. Respective ones of the plurality of receivers 110-1, 110-2, ... , 110-n may not necessarily receive respective contents from the same types of sources. In particular, each respective one of the receivers 110-1, 110-2, ... , 110-n may receive respective contents from different respective types of sources.

The synchronous signal generator 140 may generate the synchronous signals for synchronizing the glasses in correspondence with the contents based on the displaying timing of the contents.

In the single 2D mode, the glasses 200 may not be synchronized. Thus, the synchronous signals may not be utilized.

In the multi 2D mode, the synchronous signals which correspond to the number of the contents may be generated and transmitted to the glasses 200. However, because the opening and closing timing of the left-eye shutter glass and the right-eye shutter glass of the respective glasses 200 are identical, the glasses 200 need not receive more than one synchronous signal from the image display apparatus 100.

In the 3D mode, two types of the synchronous signals which respectively correspond to the left-eye image frame and the right-eye image frame may be generated. Each glasses may receive two types of the synchronous signals, and each may open and close the left-eye shutter glass and the right-eye shutter glass based on the received signals. However, as described above, the glasses may instead receive one synchronous signal and implement the synchronizing within the signal interval of the one received signal.

In addition, the image display apparatus 100 may further include an element which independently provides audio data relating to each respective content in the multi 2D mode. At least one of the receivers 110-1, 110-2, ... , 110-n may further include a demultiplexer (not illustrated) which separates the video data and the audio data from the received contents, an audio decoder (not illustrated) which decodes the separated audio data, a demodulator (not illustrated) which demodulates the decoded audio data into constituent signals which have different frequencies, and an output unit (not illustrated) which transmits the demodulated audio data to the glasses. The audio data outputted from the output unit 130 may be provided to a viewer via an appropriate means, such as, for example, earphones which are included in the glasses.

Further, if additional information, such as, for example, an Electronic Program Guide (EPG) or a subtitle, is included, the additional information may be separated from the contents by using a demultiplexer (not illustrated). The image display apparatus 100 may add the processed subtitle to the image frame in order to display same by using an additional data processor (not illustrated).

FIG. 7 is a block diagram which illustrates one signal processor from among a plurality of signal processors according to an exemplary embodiment. Referring to FIG. 7, the signal processor 120-1 may include a video processor 121-1 and a frame rate converter 122-1.

The video processor 121-1 may process the signals of the video data which is included in the received contents. In particular, the video processor 121-1 may include a decoder (not illustrated) which decodes the video data, and a scaler (not illustrated) which down-scales or up-scales the decoded data based on the screen size.

The video processor 121-1 may convert a format of the video data to a data format which corresponds to the frame rate converter 122-1. For instance, the format of the video data may be converted to the side-by-side format by horizontally connecting the respective image frame of each respective set of contents.

The frame rate converter 122-1 may convert the frame rate of the contents received from the video processor 121-1 to the multi contents display rate by determining the outputting rate of the image display apparatus 100. In particular, if the image display apparatus 100 operates at 60Hz, the frame rate converter 122-1 may convert the frame rate of each content to be n x 60Hz.

For instance, in the single 2D mode and the Full High Definition (FHD) mode, the frame rate of the contents image may be set to 120Hz. In the multi 2D mode, if two image frames of the 2D contents are alternately outputted, the frame rate of the 2D contents image may be set to 240Hz. In the 3D mode, if one left-eye image frame of the 3D contents and one right-eye image frame are alternately outputted, the frame rate of the 3D contents image may be set to 240Hz.

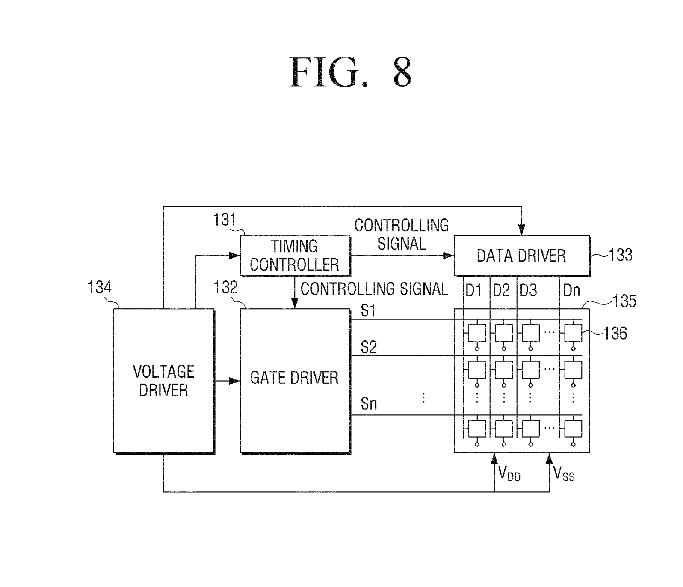

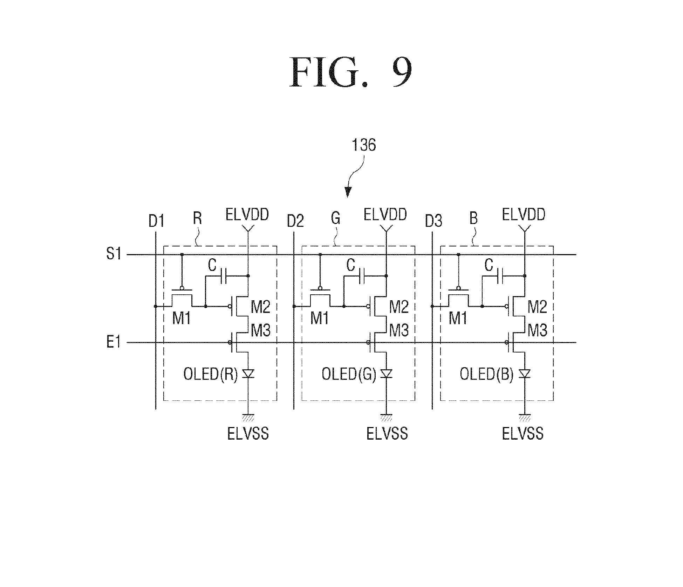

The output unit 130 will be further described below. FIG. 8 is a block diagram which illustrates the circuit of the output unit 130 according to an exemplary embodiment, and FIG. 9 is a block diagram which illustrates the circuit of the display panel according to an exemplary embodiment.

The output unit 130 may output the scaled 3D image frame. In particular, the output unit 130 may include a timing controller 131, a gate driver 132, a data driver 133, a voltage driver 134, and a display panel 135.

The timing controller 131 may receive the clock signal (DCLK), the horizontal driving signal (Hsync), and the orthogonal driving signal (Vsync) which are proper for the resolution of the image display apparatus 100, generate the gate controlling signal (scanning controlling signal) and the data controlling signal (data signal), rearrange the received red (R), green (G), and blue (B) data, and provide the same to the data driver.

The timing controller 131 may generate each of the Gate Shift Clock (GSC) signal, the Gate Output Enable (GOE) signal, and the Gate Start Pulse (GSP) signal with regard to the gate controlling signal. The "GSC" as used herein may refer to a signal which is used to determine a time for turning on or off a thin-film transistor (TFT) which is connected with emitting components. such as, for example, each of the R, G, and B emitters of an organic light-emitting diode (OLED), the "GOE" refers to a signal which is used to control the outputting of the gate driver, and the "GSP" refers to a signal which provides information relating to the first driving line of the screen in one orthogonal driving signal.

Further, the timing controller 131 may generate each of the Source Sampling Clock (SSC) signal, the Source Output Enable (SOE) signal, and the Source Start Pulse (SSP) signal with regard to the data controlling signal. The SSC may be utilized to latch the data in the data driver, and to determine the driving frequency of the data drive IC. The SOE may transmit the latched data to the display panel. The SSP is a signal which includes information relating to the start of latching or sampling the data during one horizontal driving period.

The gate driver 132 may generate the scanning signals and be connected to the display panel 135 via the scanning lines S1, S2, S3, ... , Sn. The gate driver 132 may allocate the gate on voltage (Vgh) and the gate off voltage (Vgl) which are received from the voltage driver 134 to the display panel 135 by using the gate controlling signals generated by the timing controller 131. The gate on voltage (Vgh) may be provided consecutively from each of Gate Line 1 (GL1) through Gate Line n (GLn) in order to implement the basic frame image on the display panel 135.

The data driver 133 may generate the data signal, and be connected to the display panel 135 via the data lines, D1, D2, D3, ... , Dn. The data driver 133 may complete the scaling by using the data controlling signal generated by the timing controller 131 and transmit the RGB data of the left-eye image frame and the right-eye image frame of the 3D image data to the display panel 135. The data driver 133 may convert the RGB data which is received from the timing controller 131 from a serial configuration to a parallel configuration, convert the digital data to be in an analog voltage, and provide the image data of one horizontal line to the display panel 135. The processing may be implemented consecutively in each horizontal line.

The voltage driver 134 may generate and transmit the driving voltage to each of the gate driver 132 and the data driver 133. By providing a commonly used voltage which may be provided from exterior sources, such as, for example, an alternating current voltage of 110V or 220V, the voltage driver may generate and provide the power voltage (VDD) as necessary for the display panel 135, and/or provide the ground voltage (VSS). Further, the voltage driver 134 may generate the gate on voltage (Vgh) and provide same to the gate driver 132. For the generating and the providing, the voltage driver 134 may include a plurality of voltage driving modules (not illustrated). A plurality of voltage driving modules (not illustrated) may operate independently in order to provide different respective voltages which are controlled by the controller 160, and the controller 160 may control the voltage driver 134 to have a plurality of voltage driving modules which independently provide different respective driving voltages based on the predetermined information. For instance, each of a plurality of voltage driving modules may provide different respective first voltages or a default-set second voltage based on predetermined information which is controlled by the controller 160.

According to an exemplary embodiment, the voltage driver 134 may include a plurality of voltage driving modules which respectively correspond to a plurality of divided areas of the display panel 135. The controller 160 may control each of a plurality of voltage driving modules to provide the different respective first voltages, also referred to herein as the ELVDD voltage, based on each respective screen information (or the inputting image information) which relates to each respective one of a plurality of divided areas. Thus, the controller 160 may control the size of the ELVDD voltage by utilizing the received image signals. The screen information may include at least one of the brightness and the gray scale information regarding the received images.

In the display panel 135, a plurality of gate lines GL1 ∼ GLn which cross each other and which respectively refer to corresponding pixel areas and a plurality of data lines DL1 ∼ DLn may be generated. In the crossed pixel area 136, the R, G, B emitting components, such as, for example, the OLED, may be generated. In one area of the pixel areas 136, more specifically, in the corner, the switching component, such as, for example, a TFT, may be generated. While the TFT is turning on, the gray voltage from the data driver 133 may be provided to each of emitting components R, G, and B. The emitting components R, G, and B may provide light in response to an electronic alternating current amount which is provided based on the gray voltage. By providing a greater amount of the electronic alternating currents, the emitting components R, G, and B may provide more light.

Referring to FIG. 9, the emitting components R, G, and B will be further described below. The display panel 135 may include switching components, including M₁ which is operated by using the scanning signal S1, which corresponds to the gate on voltage (Vgh), M₂ which outputs the electronic currents based on the pixel values including the changed high gray scale value provided by the data lines (DL1 ∼ DLn), and M₃ which controls the amount of the electronic currents provided by the R, G, and B emitting components from M₂ by using the controlling signals received from the timing controller 131. The switching components M₃ may be connected to the OLED and provide the electronic currents to the OLED. The OLED is an exemplary type of display which emits light by using the electronic field emitting principle when the electronic currents flow to the fluorescent or the phosphorescent organic film. The anode electrode of the OLED may connect to the pixel circuit, and the cathode electrode may connect to the second electronic source (ELVSS). The OLED may generate some brightness of the light in response to the electronic currents provided from the pixel circuit. The gate electrode of M₁ may connect to the scanning line (S1), and the first electrode may connect to the data line (D₁).

The display panel 135 may be implemented, for example, as an Active Matrix Organic Light-Emitting Diode (AM-OLED). However, the above is merely one of the exemplary embodiments; for example, the display panel 135 may also be implemented as a Passive Matrix Organic Light-Emitting Diode (PM OLED).

Although FIG. 9 illustrates the OLED, the output unit 130 may include one or more of other various display technologies, such as, for example, the Liquid Crystal Display Panel, the Plasma Display Panel, the OLED, the Vacuum Fluorescent Display (VFD), the Field Emission Display (FED), and the Electro Luminescence Display (ELD).

As described above, the display apparatus 100 may operate in any one of the single 2D mode, the multi 2D mode, and the 3D mode based on an input which is provided with respect to the mode selection menu and received from the interface 150. The controller 160 may control the output unit 130 to display the menu setting UI, which may include the mode selection menu. The menu setting UI may indicate that the viewer can input his manipulation by using the menu, and the image display apparatus 100 can operate by using setting information which is received via the menu setting UI.

The viewer may select the operating mode from among the single 2D mode, the multi 2D mode, and the 3D mode, and set various parameters which relate to the detailed operation of the selected mode. Based on selections which are received via the menu setting UI, the controller 160 may control the image display apparatus 100.

Displaying the menu may be implemented by using at least one of various technological methods. For instance, the signal processor 120 may encode the menu to be displayed in conjunction with the image frame of the contents and thereby constitute the image frame. In the multi 2D mode, the menu may be encoded to be displayed in conjunction with the image frame of the contents at the time of displaying the contents in order to constitute the image frame. Accordingly a viewer who is watching another set of contents may not watch the menu.

In another instance, the image display apparatus 100 may be installed with an on-screen display (OSD) displaying layer. Such an apparatus may have an advantage that additional signal processing for encoding the OSD is not required; however, synchronizing the displaying image may be required. In the multi 2D mode, even if the OSD menu is not included in the image frame of the contents, the OSD menu may be synchronized with the contents image frame and displayed on the OSD displaying layer at the time of displaying the contents.

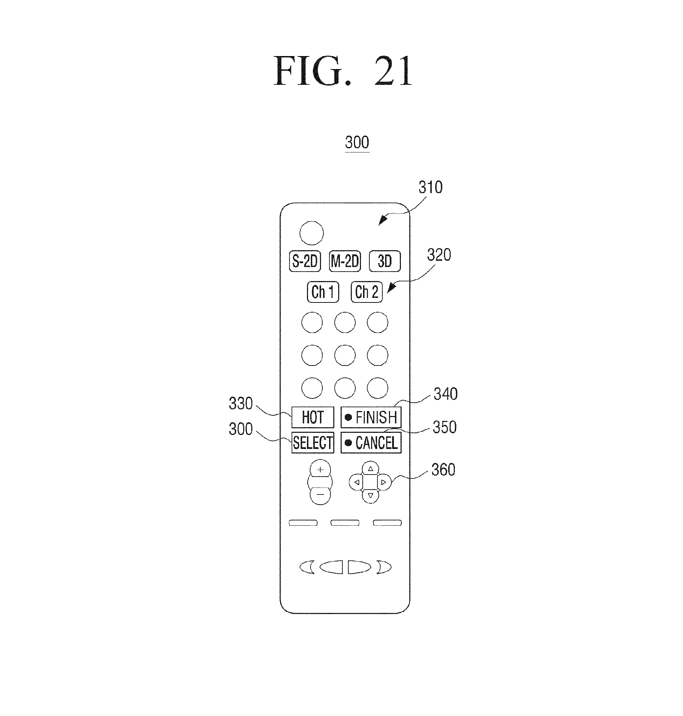

To select the item displayed on the menu or the screen, a remote controller (see FIG. 21) may be utilized. The remote controller may generate a wireless controlling signal and transmit the generated signal to the image display apparatus 100 via the interface 150 by using, for example, short distance communication technology (see FIG. 21). The viewer may press a button of the remote controller in order to activate or select the menu. However, the exemplary embodiments may not be limited to utilizing the remote controller, and also may include any suitable type of apparatuses which may be used for generating and transmitting the controlling signal. For instance, a smart phone or the glasses 200 may be utilized to control the image display apparatus 100.

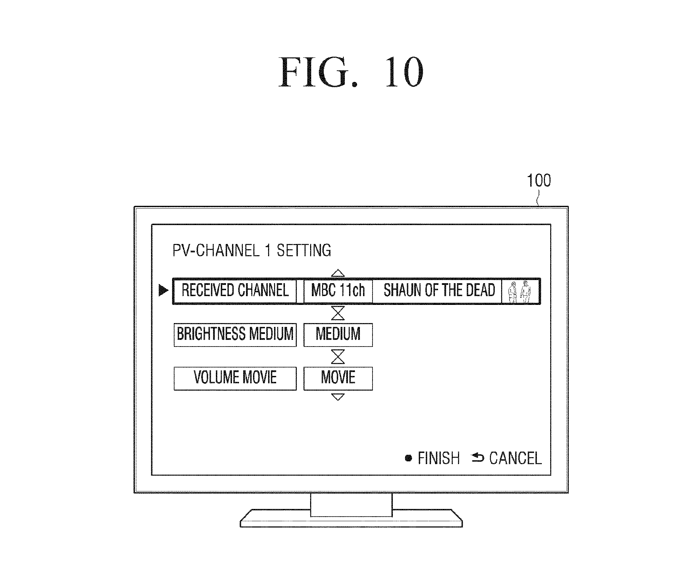

FIG. 10 illustrates a display screen of the setting menu UI according to an exemplary embodiment. Referring to FIG. 10, the controller 160 may display the menu setting UI, including a menu by which the viewer can select a channel in the multi 2D mode. The setting menu UI may also be referred to as a menu setting UI.

The term "channel," as used herein, may indicate a communication circuit by which contents are transmitted and received. In the multi 2D mode, each respective one of a plurality of outputted 2D contents may use different channels. The broadcasting channel may indicate the communication circuit which is used for transmitting the contents by using a transmitter of the contents or receiving the transmitted contents by using the receiver in the image display apparatus. Thus, in the multi 2D mode, the receiver may be tuned to the broadcasting channel in the image display apparatus 100, and the image display apparatus 100 may display the received contents from one of the broadcasting channels.

FIG. 10 illustrates the setting menu UI, including a menu which may be used for selecting one channel in the dual view by which different contents may be alternately displayed and viewers may watch respective contents by using glasses which are synchronized with the displaying timing of the corresponding contents. The broadcasting channel of Channel 1 is MBC, and the title of a movie, "Shaun of the Dead," may be displayed as information relating to the content to be displayed. The menu may include information relating to reduced screen or a thumbnail image.

The viewer may change the channels by using the up and down keys of the remote controller in FIG. 21. Further, the viewer may set various parameters relating to the viewing environment, such as, for example, the brightness and/or the volume. The viewing environment may also refer to various aspects of the display environment of the contents, such as, for example, the screen mode, the backlight, the depth, the brightness, the contrast, the resolution, the sharpness, the black tone, the size and the position of the scripts, the master volume, the equalizer information (balance, frequency bandwidth amplifying level), the SRS TruSurround HD, and the black tone. If the viewer completes the setting by pressing the setting finish button of the remote controller, a signal which indicates a completed setting may be transmitted to the image display apparatus 100, and the controller 160 may control the image display apparatus 100 as set.

The menu setting UI may be displayed after changing the mode by using an instruction relating to mode selection, and the menu setting UI may also be displayed before changing the mode. Alternatively, the menu setting UI may be displayed in the default mode.

For instance, if an instruction relating to a selection of the multi 2D mode is received and the current mode is the 2D mode, the channel selection menu may be displayed in the 2D mode. Further, after changing to the multi 2D mode, the menu may be displayed. The menu may be displayed by determining the displaying timing of the contents in the multi 2D mode, which will be further described below. Further, the menu may be displayed in the default screen. For instance, if the viewer watching the contents in the multi 2D mode tries to set the detailed units of the 3D mode by using the remote controller of FIG. 21, the image display apparatus 100 may change the mode to the single 2D mode and display the menu setting UI of the 3D mode on the display.

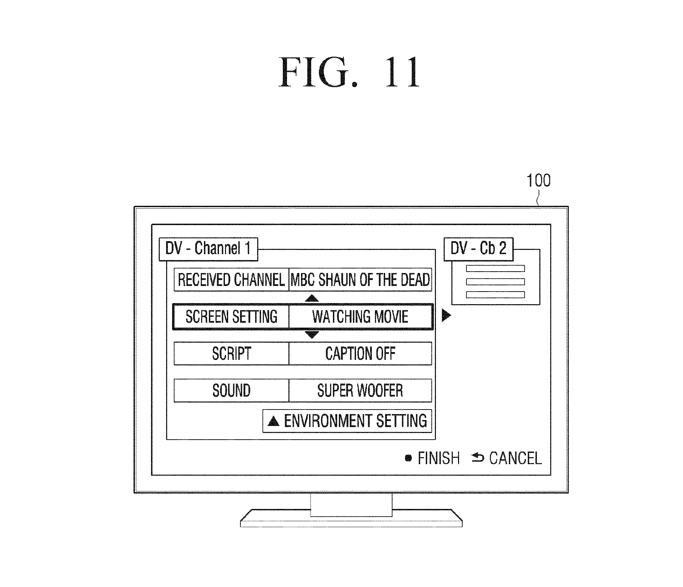

The below-described exemplary embodiments may include the above method for displaying the menu, unless otherwise indicated. FIGS. 11, 12, and 13 illustrate the image display apparatus according to exemplary embodiments.

Referring to FIGS. 11, 12, and 13, the controller 160 may control the output unit 130 to display a plurality of menus which respectively correspond to a plurality of 2D contents in the multi 2D mode on the predetermined area of the screen.

For instance, the controller 160 may control displaying a plurality of menus in at least one of the Picture in Picture PIP format, the vertical format, and/or the horizontal format.

First, a plurality of menus may be displayed in the PIP format. Referring to FIG. 11, in the multi 2D mode, a first menu corresponding to one of a plurality of 2D contents and a second menu corresponding to another of a plurality of 2D contents may be displayed in different areas of the screen. The menu which corresponds to Channel 1 and which is displayed on the center of the screen may include at least one of the received channel menu for changing the received broadcasting channels, the screen setting menu for setting the screen based on the contents, the subtitle menu for displaying the subtitle, and the sound menu for setting the sound. The viewer may utilize the channel setting button (see item 320 of FIG. 21) in order to set the menu of Channel 1, and the viewer may utilize the left and right arrow buttons of the remote controller (see item 360 of FIG. 21) or other buttons in order to activate the menu which corresponds to Channel 2 and display this menu on the center of the screen. The placement of each of the Channel 1 menu and the Channel 2 menu may be changed, and the viewer may set the Channel 2 menu. As an example, Channel 1 may relate to one content (e.g. TV channel no. 11) and Channel 2 may relate to a different content (e.g. TV channel no. 22). After completing the setting of the mode, the viewer may push a button of the remote controller in order to indicate completion of the menu (see item 340 of FIG. 21) and thereby finish using the menu screen.

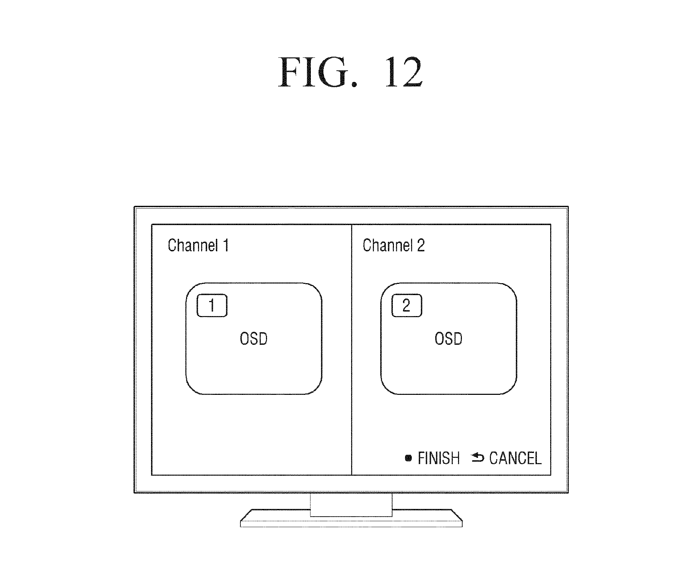

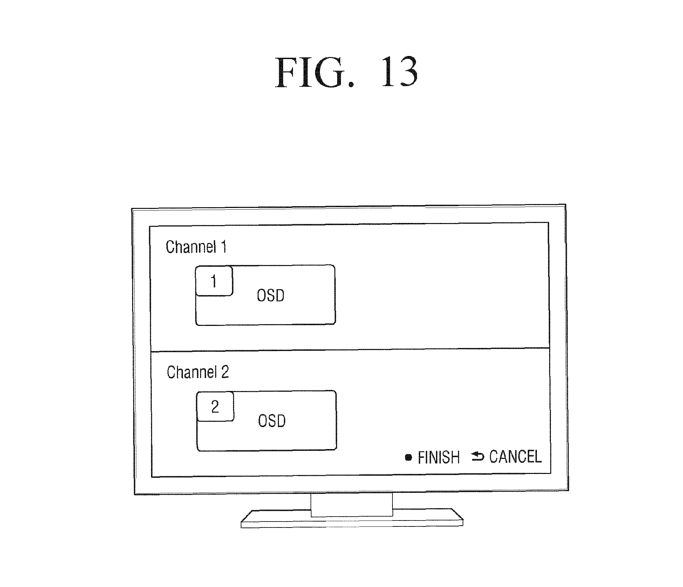

FIGS. 12 and 13 illustrate exemplary embodiments which are similar to those described above with respect to FIG. 11. FIG. 12 illustrates a display of two menus corresponding to the respective contents which are arranged horizontally in the multi 2D mode. FIG. 13 illustrates a display of the two menus which are arranged vertically. As described, the menu of one channel may be activated and set. By using the button of the remote controller, the viewer may change the activated menu and set the menu of another channel.

Although not illustrated herein, a plurality of remote controllers may be utilized to perform the controlling according to an exemplary embodiment. For instance, the viewers watching the different contents in the multi 2D mode may set the menu of a channel to be watched by using different remote controllers (not illustrated). The viewer watching Channel 1 may set the menu of Channel 1 by using the remote controller (not illustrated) to control Channel 1, and the viewer watching Channel 2 may set the menu of Channel 2 by using the remote controller (not illustrated) to control Channel 2.

The menu which corresponds to the contents in the multi 2D mode may be outputted in the single 2D mode and be set such that the glasses are not synchronized with the displaying timing, as described above. Further, the menu may be set in the multi 2D mode. If every menu which corresponds to the contents is displayed as described above with respect to the above exemplary embodiment, every image frame in the contents may be displayed in conjunction with the menu at the time of displaying the image frame. In the 3D mode, the menu may be displayed at every time of displaying the left-eye image frame and the right-eye image frame.

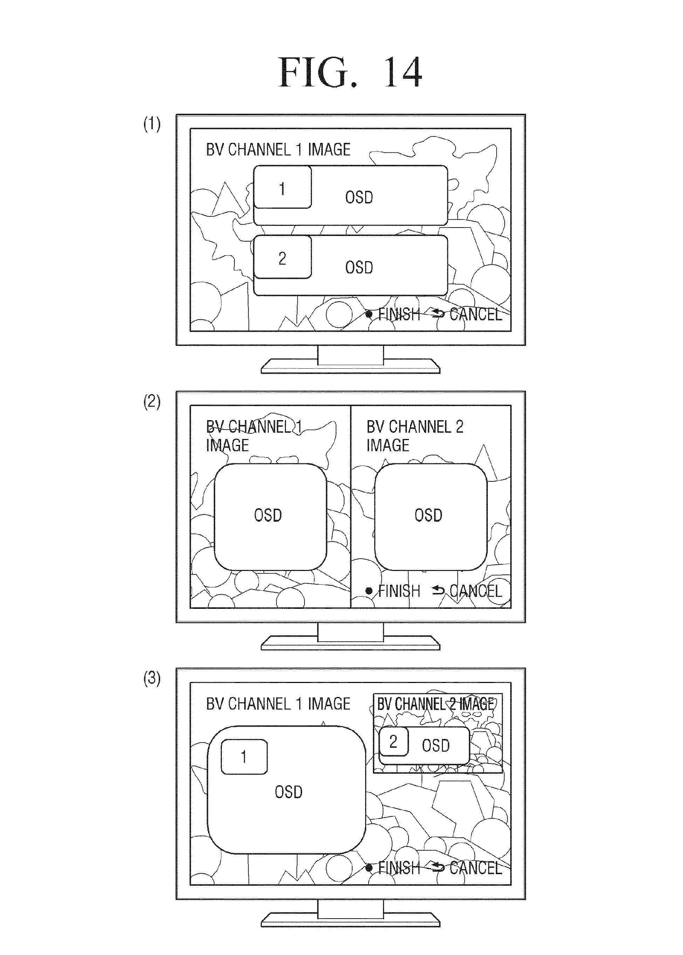

Further, the image display apparatus 100 may only display the menu for setting the operating mode on the screen and display the menu with the images in each channel. FIG. 14 illustrates the displaying the menu with the images.

Referring to FIG. 14, if the image display apparatus 100 displays a plurality of menus which respectively correspond to a plurality of 2D contents on the predetermined areas of the screen, the controller may control the displaying the image frame of a plurality of 2D contents in the single 2D mode, or the displaying a plurality of image frames of a plurality of 2D contents on the predetermined areas of the screen. Thus, the image may be overlapped with the menu, and the menu may be transparent so that the viewer may watch the image.

In FIG. 14, the top drawing (1) illustrates that a first menu which corresponds to a first image frame in the multi 2D mode and a second menu which corresponds to a second image frame may be arranged vertically, and one image frame (i.e., a Channel 1 image) may be outputted in the background. The viewer may need to find the information relating to the currently outputted image of the channel in the multi 2D mode. Thus, the background of the menu may display the Channel 1 image in the current ₂D mode, and the menu may be transparent so that the viewer can find the Channel 1 image more clearly. In effect, the Channel 1 image is displayed in the background in a single 2D mode.

In FIG. 14, the middle drawing (2) illustrates that the menus which respectively correspond to the contents in the multi 2D mode may be displayed horizontally, and in the background a Channel 2 image may also be displayed.

In FIG. 14, the bottom drawing (3) illustrates that the menus may be displayed in the PIP format, and the corresponding images may be displayed in the corresponding areas.

If each menu includes the function for setting the broadcasting channels as described above with respect to the exemplary embodiments illustrated in FIGS. 10 and 11, and the viewer changes the broadcasting channels of the menu by using the remote controller of FIG. 21, the image of the background may be changed to the real-time image which is outputted via the channel to be selected.

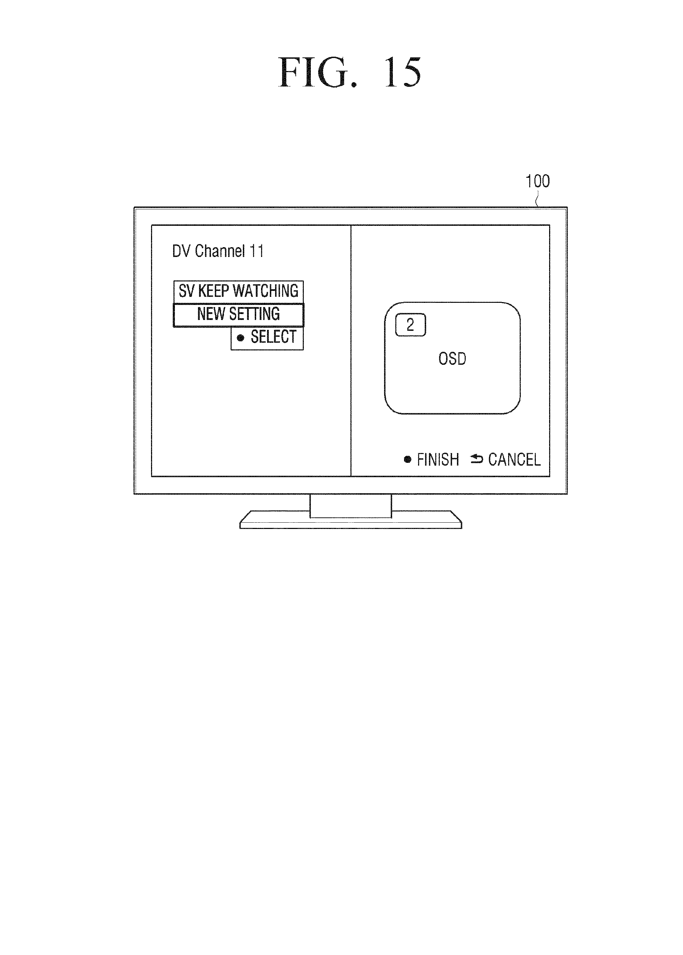

Further, if the viewer watches the contents in the single mode (2D or 3D) and the mode changes to the multi 2D mode, or the menu of the multi 2D mode is needed to be set, it may be more convenient that one channel of the multi 2D mode may be set as in the single 2D mode. For instance, if one viewer watches the image display apparatus 100 in the single 2D mode, and another viewer tries to change the mode of the image display apparatus 100 to the multi 2D mode for watching another channel, the viewer watching in the single 2D mode may want to keep watching the channel as already set. If the setting the single 2D mode is utilized to set one channel in the multi 2D mode, it may become more convenient. FIG. 15 illustrates the above-described exemplary embodiment.

Referring to FIG. 15, any one of a plurality of menus may include a menu which includes at least one item relating to a determination of whether the image frame of the 2D content which is displayed in the single 2D mode may be displayed when the multi 2D mode has been selected. A menu which corresponds to any one of the contents in the multi 2D mode may include a menu which includes at least one item relating to a determination of whether the contents as displayed in the multi 2D mode may also be displayed as in the single 2D mode setting (SV: Single View), and at least one item relating to a selection of a new setting. If the viewer selects the single 2D mode setting to be in the multi 2D mode, the setting in the multi 2D mode may be performed as the same as in the single 2D mode. For instance, the broadcasting channel, the volume, the brightness, and the others may be set in a same manner as in the single 2D mode. Further, if the viewer selects the menu relating to a selection of a new setting, the menu setting UI of every channel may be displayed, as described above.

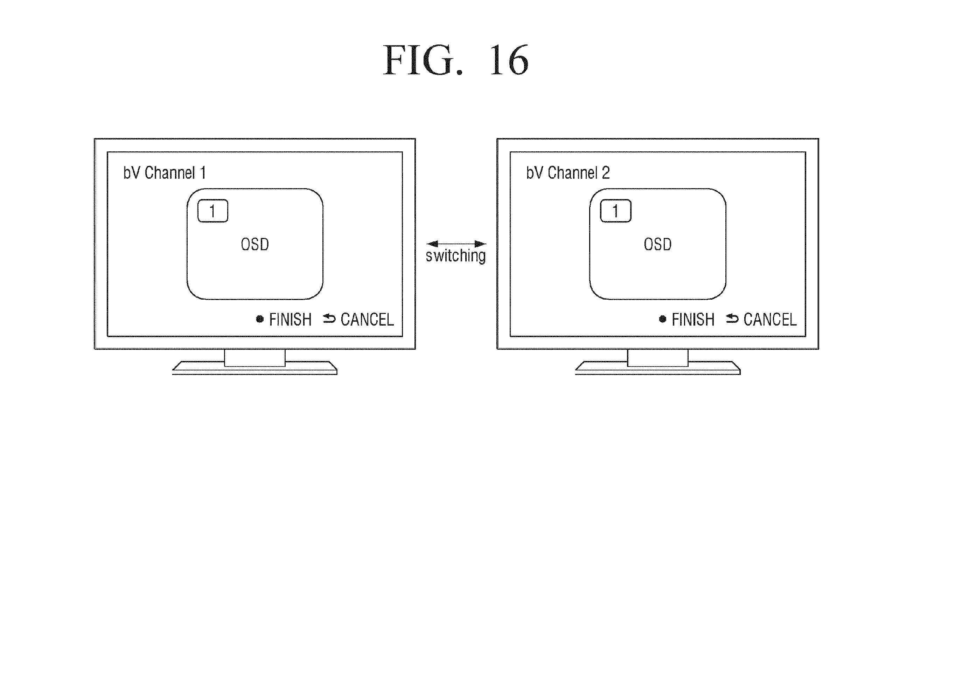

The menu may be displayed by using a switching method. FIG. 16 illustrates an exemplary embodiment.

Referring to FIG. 16, the controller 160 may display a menu which corresponds to any one of a plurality of 2D contents in the multi 2D mode, and may control displaying a menu which corresponds to another content from among the plurality of 2D contents if a menu switch is received via the interface 150. Referring to FIG. 16, if the menu switch is received while displaying a Channel 1 menu, a Channel 2 menu may be displayed. The menu switch may be inputted by using the direction button (see item 360 of FIG. 21) of the remote controller. Because one screen may display the menu of one channel (i.e., a menu which corresponds to one particular set of contents), the menu switch may be utilized when many settings are required. In other words, the user may switch from a first menu (e.g. menu relating to Channel 1) to a second menu (e.g. menu relating to Channel 2) by inputting a menu switch command which, for example, may be in the form of a button on the remote controller.

Further, the menu setting UI may include the menu setting UI of the 3D mode, which includes at least one item relating to setting a formatting method of the left-eye image frame and the right-eye image frame. The menu UI of the 3D mode may include the menu functions which are similar to those described above with respect to the 2D mode, with some modifications as indicated below in the following description.

The formatting method of the 3D image frame may be performed, for example, by using the High Definition Multimedia Interface (HDMI) 1.4 video format. Thus, the formatting method may include one of the Frame Packing, the Field Alternative, the Line Alternative, the Side by Side, and the L + depth, L + depth + graphics + graphics_depth format.

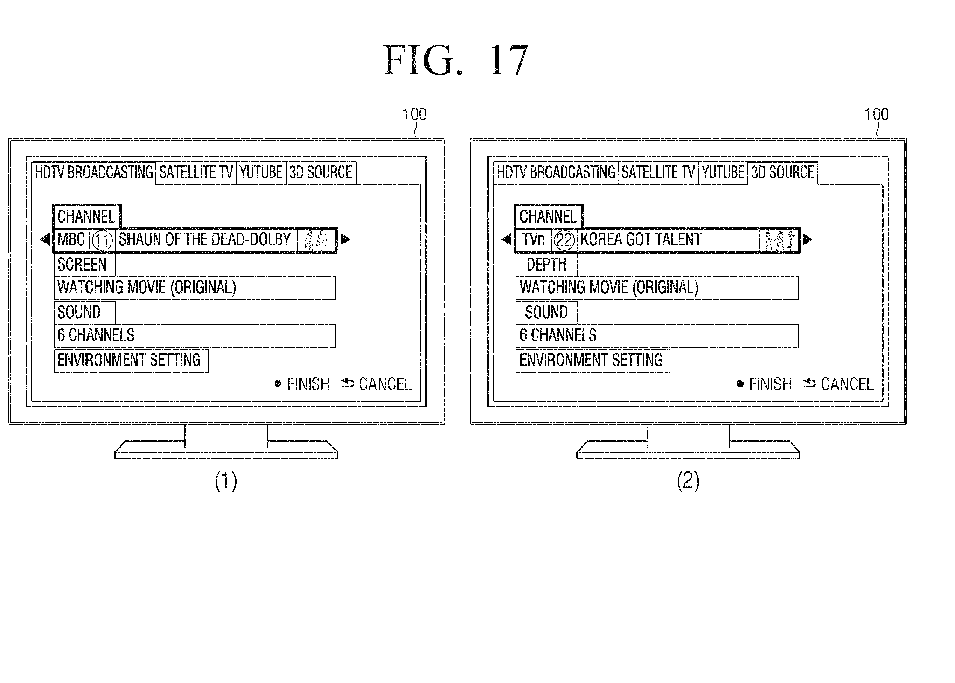

FIG. 17 illustrates the source selection menu. The menu setting UI may include the source selection menu, which may include at least one item relating to determining a source of the contents. The determined source may indicate a type of the contents, as classified by the transmitter of the contents. For instance, by the source, the contents may be classified as including at least one of VoD contents, premium VoD contents, broadcasting contents, internet contents, local files, and exterior contents which may be obtained via a connection with the DLNA network. However, the source may not be limited to the above; for example, other potential classifications may include recorded broadcasting contents and real-time broadcasting contents. The controller 160 may control the displaying the menu which corresponds to the selected source by providing the source selection menu.

In the exemplary embodiment shown on the left side of FIG. 17, i.e., drawing (1), the image display apparatus 100 may display a menu which relates to high definition television (HDTV) broadcasting, and include information relating to the broadcasting channel, the screen, and other parameters relating to the viewing environment, such as, for example, the sound. Regarding the HDTV broadcasting, because the definition is high and the image is perceived more naturally by a viewer, the setting menu which includes items relating to the screen and the sound may be displayed as the main menu. However, displaying the above menu is merely one exemplary embodiment; other various modified exemplary embodiments may be utilized.

The drawing shown on the right side of FIG. 17, i.e., drawing (2), illustrates the image display apparatus 100 displaying the 3D menu by moving with another tap. Regarding the 3D image, because humans experience binocular disparity, controlling the depth may be necessary for each viewer. Thus, the depth controlling menu may be included in the main menu. However, displaying this menu is merely one of the exemplary embodiments.

As described above, the menu setting UI may be displayed (i) after changing the mode by the instruction to select, (ii) in the current mode before changing the mode by the order, and/or (iii) in the default mode.

Because the description above includes a description relating to the cases (ii) and (iii), the case (i) will be further described below. First, if the image is displayed in the multi 2D mode, displaying the menu setting UI will be described.

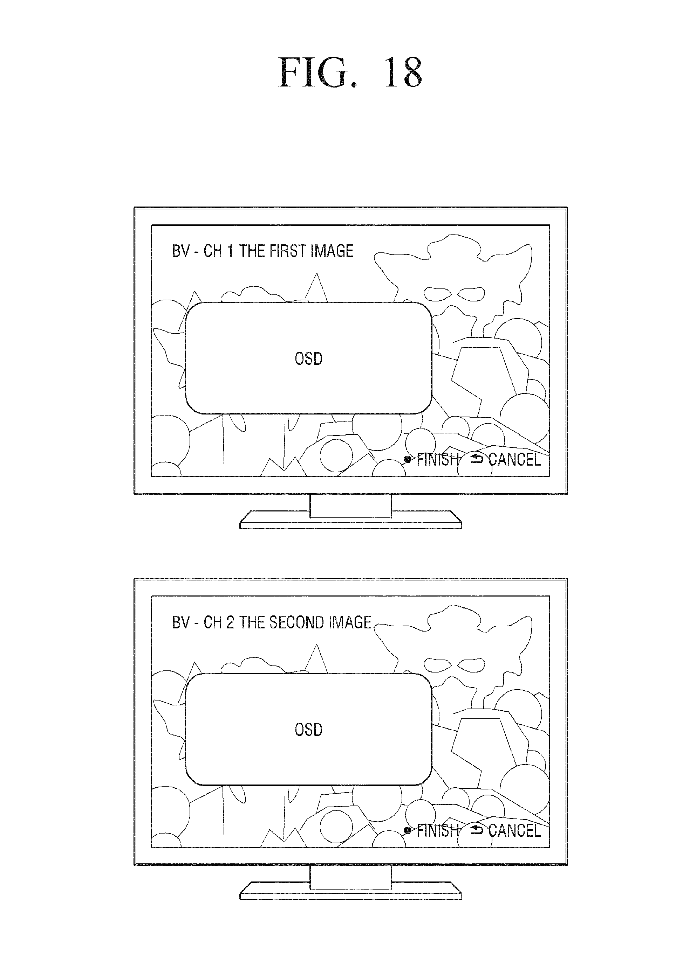

FIG. 18 illustrates a menu screen for each respective channel in the multi 2D mode according to an exemplary embodiment. Referring to FIG. 18, if the image frame of a plurality of contents is alternately displayed in the multi 2D mode, the controller 160 may control the displaying at least one menu which corresponds to a plurality of 2D contents at the time of displaying each respective content.

In the exemplary embodiment illustrated in FIG. 18, the menu which corresponds to a first image frame of a respective one of a plurality of 2D contents may be outputted at the time of displaying the image frame. The menu which corresponds to a second image frame may be outputted at the time of displaying the second image frame. As described above, the menu may be encoded in the image frame and outputted as the image frame, or may be synchronized with the image frame and outputted in the OSD layer. The viewer watching Channel 1 may not see the menu displayed in Channel 2, and the viewer watching Channel 2 may only see the menu. In other words, the menu relating to Channel 1 can only be seen by the viewer of Channel 1, and cannot be seen by the viewer of Channel 2. Likewise, the menu relating to Channel 2 can only be seen by the viewer of Channel 2, and not by the viewer of Channel 1.

The above exemplary embodiment may solve the problem of setting the authorization for controlling the image display apparatus 100 by utilizing the remote controller of FIG. 21. If one remote controller may be utilized to control the apparatus, each viewer may input a respective instruction, which may inadvertently affect other contents that the other viewers are watching, and thus, the other viewers may encounter an unexpected problem. However, in the above exemplary embodiment, each viewer can watch his own respective menu but is prevented from providing input to respective menus which correspond to the other contents. In order to transceive the controlling signals more correctly, the remote controller may include the setting buttons (see item 320 of FIG. 21) in each channel. For instance, the viewer may push the button for setting Channel 1 in order to set Channel 1. Another viewer who is watching another set of contents may push the button for setting Channel 2 in order to set Channel 2.

If the mode changes from the single 2D mode to the multi 2D mode, and if the respective image frames of the different contents are alternately displayed, the viewer watching the image display apparatus 100 without the glasses may not be able to watch the image. In particular, if the viewer changes the mode of the image display apparatus 100 to the multi 2D mode, the above-described problem may occur.

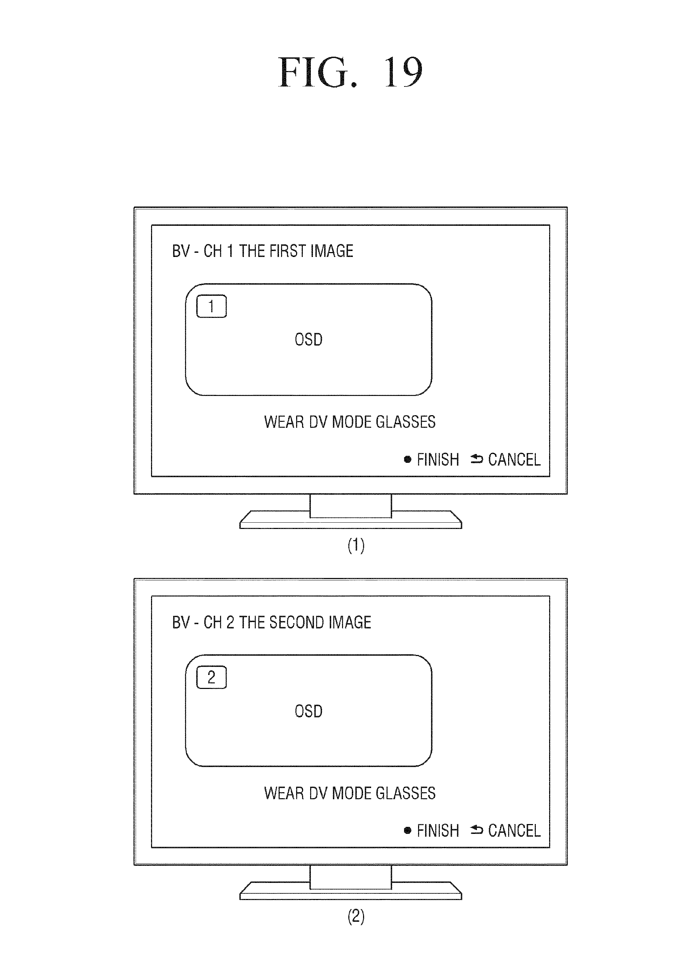

Thus, it may be important to provide a notice relating to wearing the glasses 200 to the viewer. FIG. 19 illustrates an exemplary notice screen which includes information relating to wearing the glasses 200 when the mode changes from the single 2D mode to the multi 2D mode.

Referring to FIG. 19, the controller 160 may control the displaying the message which includes information relating to wearing the glasses at the time of displaying every image frame of a plurality of 2D contents. The controller 160 may control the displaying the message "Wear DV MODE glasses" at the displaying timing of the contents outputted from Channel 1 and at the displaying timing of the contents outputted from Channel 2. Because the message is displayed at every displaying timing, the viewer without the glasses 200 may watch the message. The controller 160 may display the message for a predetermined amount of time and then terminate the displaying of the message after the predetermined amount of time so as not to disturb the watching.

If the 3D mode is selected, the controller 160 may control the displaying at least one menu which corresponds to the 3D mode at the time of displaying the left-eye image frame and the right-eye image frame of the 3D contents.

If the 3D mode is set and the left-eye image and the right-eye image of the 3D contents are alternately displayed, the controller 160 may control the displaying at least one menu which corresponds to the 3D contents at the time of displaying the left-eye image frame and at the time of displaying the right-eye image frame.

If the multi 2D mode is selected in conjunction with the single 2D mode, the controller 160 may control the displaying a menu which includes at least one item relating to determining whether the image frame may be displayed in the multi 2D mode in a same setting as the 2D contents are displayed in the single 2D mode at one displaying timing of a plurality of 2D contents.

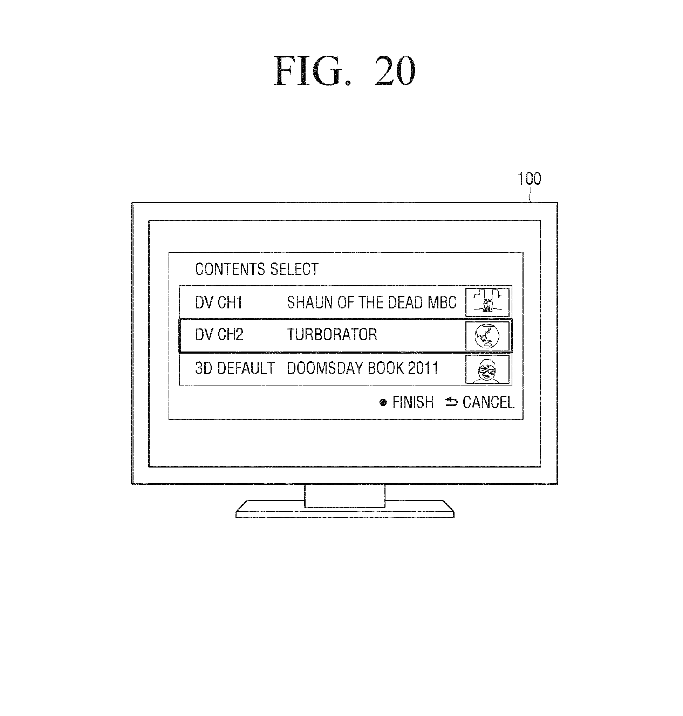

FIG. 20 illustrates an exemplary screen via which the single 2D mode or the 3D mode is selected in conjunction with the multi 2D mode. Referring to FIG. 20, if the single 2D mode or the 3D mode is selected in conjunction with the multi 2D mode, the controller 160 may control the displaying a menu which includes at least one item relating to selecting one of a plurality of 2D contents which are being displayed in the multi 2D mode.

In the exemplary embodiment in FIG. 20, if the viewer changes the mode of the image display apparatus 100 from the multi 2D mode to the 3D mode, a menu which includes an item relating to selecting one of the movie, "Shaun of the Dead," outputted from Channel 1 in the multi 2D mode and the movie, "Turborator," outputted from Channel 2 in the multi 2D mode, may be displayed. Further, the menu may also include an item relating to the default setting in the 3D mode, which is displayed as referring to the movie, "Doomsday Book 2011." The default setting may include at least one of the setting received most recently with respect to the 3D mode and the setting stored in the interior recording medium of the image display apparatus 100.

When the mode changes from the multi 2D mode to the 3D mode, the menu which includes at least one item relating to a selection of one of a plurality of 2D contents being displayed in the multi 2D mode may be displayed in the single 2D mode, as described above. The image display apparatus 100 may change to the single 2D mode and display the menu in order to facilitate a selection of a plurality of 2D contents. If an input relating to a selection of the contents is received, the image display apparatus may change to the 3D mode, convert the selected contents into a 3D mode, and output the converted contents.

In the multi 2D mode, the menu may be synchronized and outputted with the contents screen. Without changing to the single 2D mode, the image display apparatus 100 may output a menu which includes at least one item relating to a selection of one of a plurality of 2D contents for displaying in the multi 2D mode at the displaying timing of an entirety of the plurality of 2D contents or the specific selected contents. If an input relating to a selection of the contents is received, the image display apparatus 100 may change to the 3D mode, convert the selected contents into a 3D mode, and output the converted contents.

Likewise in changing to the 3D mode, if the mode changes from the multi 2D mode to the single 2D mode, the image display apparatus 100 may display a menu which includes at least one item relating to a selection of one of a plurality of 2D contents for displaying in the multi 2D mode, or display the menu after changing to the single 2D mode.

If the mode changes from the 3D mode to the multi 2D mode or from the single 2D mode to the multi 2D mode, the image display apparatus may display a menu which includes at least one item relating to a selection of the contents of the newly added channels as well as a menu which includes at least one item relating to determining whether the current contents shall continue to be displayed or not. The menu may be displayed before or after the mode changes. If the contents of a new channel are selected, the image display apparatus 100 may change the mode to the multi 2D mode and output the selected contents at the corresponding displaying timing.

For the exemplary embodiment of controlling the image display apparatus 100, a remote controller 300 will be explained below. FIG. 21 illustrates the buttons of the remote controller 300 according to an exemplary embodiment.

Referring to FIG. 21, the remote controller 300 may include a mode selection button 310, a channel selection button 320, a hotkey 330, a setting finish button 340, a cancel button 350, and a direction button 360.

The mode selection button 310 may include at least one button which is usable for selecting the mode of the image display apparatus 100. If the at least one mode selection button 310 is pressed, the mode selection controlling signal may be transmitted to the image display apparatus 100, and the mode may be selected. The menu screen of the operating mode may be displayed, which is described above.

The controller 160 may receive any one of a first remote controller signal for changing the mode to the single 2D mode (transmitted by pressing S-2D button), a second remote controller signal for changing the mode to the multi 2D mode (transmitted by pressing M-2D button), and a third remote controller for changing the mode to the 3D mode (transmitted by pressing 3D button), control the displaying the viewer setting UI for the format which corresponds to the received remote controller signal, utilize the setting information received via the viewer setting UI, and select one of the single 2D mode, the multi 2D mode, and the 3D mode.

The channel setting button 320 may include at least one button which is usable for setting the channel for displaying the contents in the multi 2D mode. If Channel 1 button is pressed, the menu which corresponds to Channel 1 may be displayed, and the viewer may provide setting parameters via the menu. The displaying the menu may be performed as described above.

By including the buttons for the modes, the operating mode may be changed more easily, and the image display apparatus 100 may display the menu screen which corresponds to the selected operating mode. Thus, the viewer may set the operating mode more conveniently.

The setting finish button 340 may include a button which is usable for indicating a completion of the setting. If the setting finish button 340 is pressed, the controlling signal which indicates a completion of the setting may be transmitted from the remote controller to the image display apparatus 100, and the controller 160 may complete the setting and may not further display the menu. By using the setting information, the image display apparatus 100 may operate.

The cancel button 350 may include a button which is usable to cancel the setting. If this button is pressed, every selection on the currently displayed menu may be canceled, and the menu may not be further displayed. If the menu shows "Exit," the viewer may exit from the menu screen by pressing the cancel button.

The direction button 360 may include a button which is usable to transmit a controlling signal for toggling and consecutively highlighting each item or sub menu on a respective menu.

The hotkey 330 may include a button which is usable for displaying a menu which includes at least one item relating to changing the mode to the single 2D mode, the multi 2D mode, or the 3D mode.

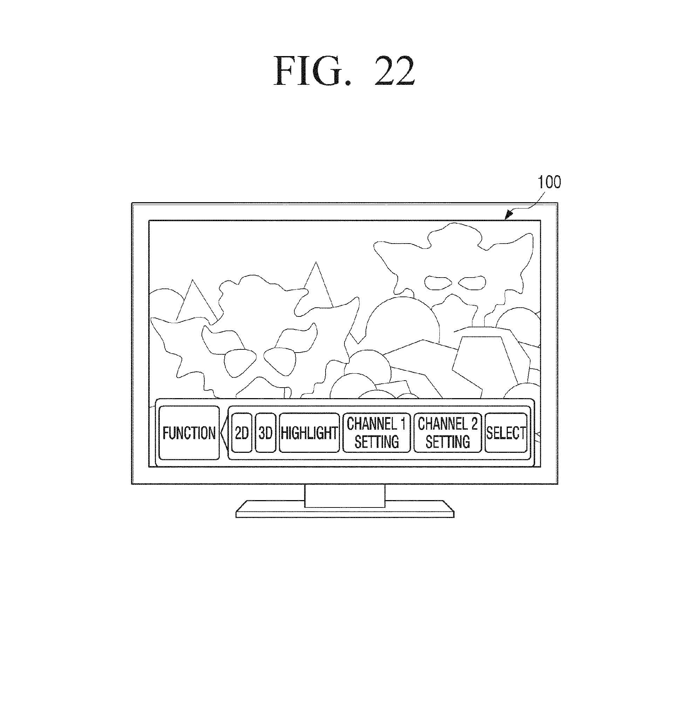

FIG. 22 illustrates a screen of the image display apparatus 100 which may be displayed if the hotkey 330 is pressed, according to an exemplary embodiment. Referring to FIG. 22, the controller 160 may control the displaying the hotkey UI, including a first menu which includes at least one item relating to changing to the single 2D mode (i.e., a "2D" menu), a second menu which includes at least one item relating to changing to the multi 2D mode (i.e., a "Dual-View" menu), and a third menu which includes at least one item relating to changing to the 3D mode (i.e., a "3D" menu), which hotkey UI is usable for selecting one of the first menu, the second menu, and the third menu.

If one of the first menu, the second menu, and the third menu is selected on the hotkey UI, the controller 160 may control the displaying at least one menu which corresponds to the mode of displaying the contents in the predetermined area of the screen.

FIG. 22 illustrates that when the Dual-View menu which corresponds to the multi 2D mode on the hotkey UI is toggled, the sub menu which includes at least one item relating to setting each channel is displayed according to an exemplary embodiment. By utilizing the direction key 360 of the remote controller, the menu may be toggled and Channel 1 may be toggled. If Channel 1 is selected, in other words, if the confirm button or the setting finish button is pressed, the menu setting screen of Channel 1 may be displayed.

The hotkey 330 may be utilized for displaying a frequently selected menu with convenience. For instance, if the viewer selects the setting menu of Channel 1 by using the hotkey UI, only the menu which includes at least one item relating to determining whether to continue watching the broadcasting channel displayed in the single 2D mode or to watch another channel may be displayed. Normal viewers may not change the viewing environment frequently, and may prefer to change the environment by using the remote controller while watching the broadcasting channel. Thus, the hotkey UI may be utilized for viewer convenience.

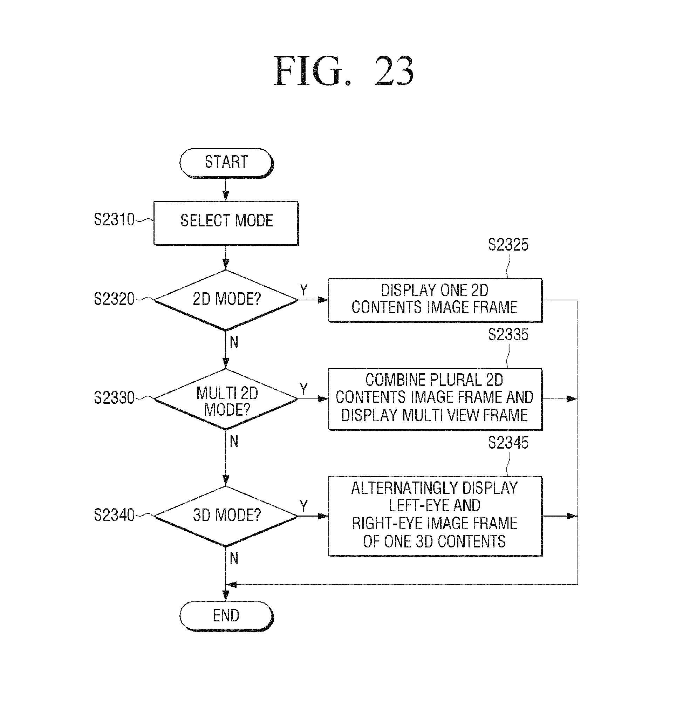

A method for displaying a menu according to an exemplary embodiment will be described below. FIGS. 23 through 32 are respective flowcharts which illustrate respective menu displaying methods according to various exemplary embodiments.

Referring to FIG. 23, a menu displaying method according to an exemplary embodiment may include selecting one mode from the single 2D mode, the multi 2D mode, and the 3D mode at operation S2310, displaying the image frame of the 2D contents at operation S2325, if the 2D mode is selected at operation S2320-Y, combining the image frames of a respective plurality of 2D contents and displaying the combined multi view frame at operation S2335, if the multi 2D mode is selected at operation S2330-Y, and alternately displaying the left-eye image frame and the right-eye image frame of the 3D contents at operation S2345, if the 3D mode is selected at operation S2340-Y.

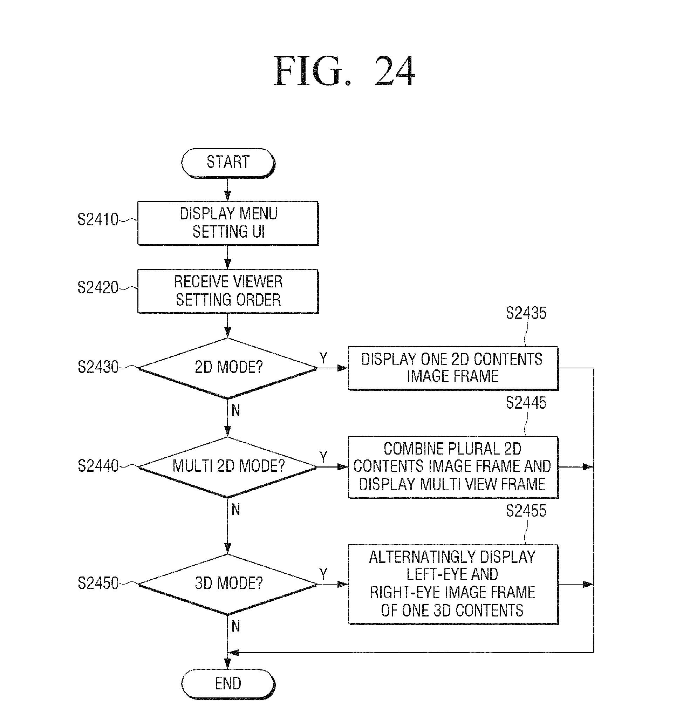

Referring also to FIG. 24, the selecting may include displaying, at operation S2410, the menu setting UI which includes a menu that can be set by a viewer, and receiving, at operation S2420, an instruction which includes information relating to setting the operating mode to be one of the single 2D mode, the multi 2D mode, and the 3D mode on the menu setting UI.

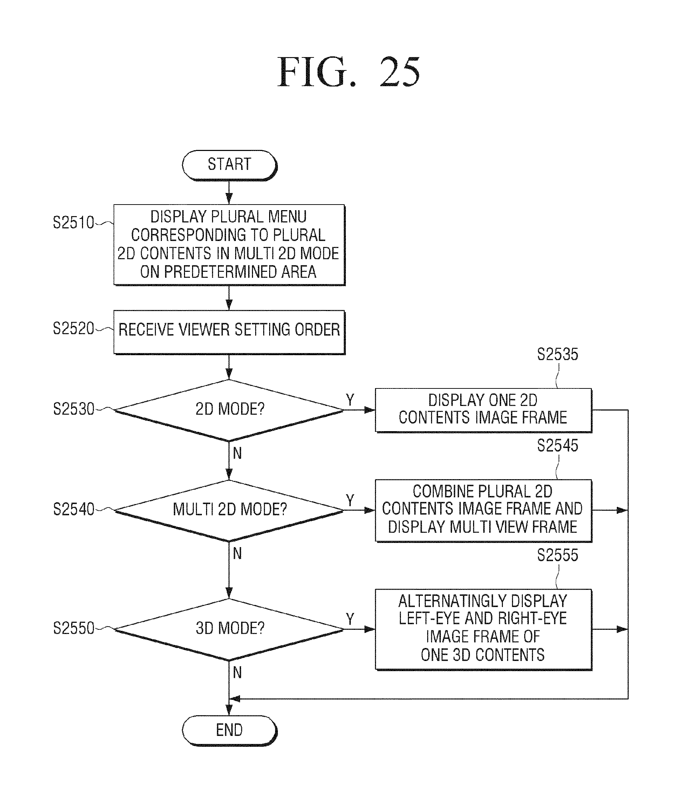

Further, referring also to FIG. 25, the displaying the menu setting UI may include displaying, at operation S2510, a plurality of menus which respectively correspond to a plurality of 2D contents in the multi 2D mode on the predetermined area of the screen.

A plurality of menus may be displayed by being placed in at least one of the PIP format, the vertical direction format, or the horizontal direction format.

If a plurality of menus which respectively correspond to a plurality of 2D contents are displayed in the predetermined area of the screen, the method may further include displaying one image frame of a respective one of a plurality of 2D contents in the single 2D mode, or displaying a respective plurality of image frames of a plurality of 2D contents on the predetermined area of the screen.

In the displaying of the menu setting UI, one of a plurality of menus may include a menu which includes at least one item relating to determining whether the image frame of the 2D contents displayed in the single 2D mode is displayed in a same setting as in the multi 2D mode.

The displaying the menu setting UI may include displaying a menu which corresponds to a first one of a plurality of 2D contents in the multi 2D mode, and the displaying a menu which corresponds to a second one of the plurality of 2D contents, if the menu switch is received.

The menu setting UI may include a menu setting UI of the 3D mode which includes at least one item relating to determining the formatting method to be used with respect to each of the left-eye image frame and the right-eye image frame of the 3D contents.

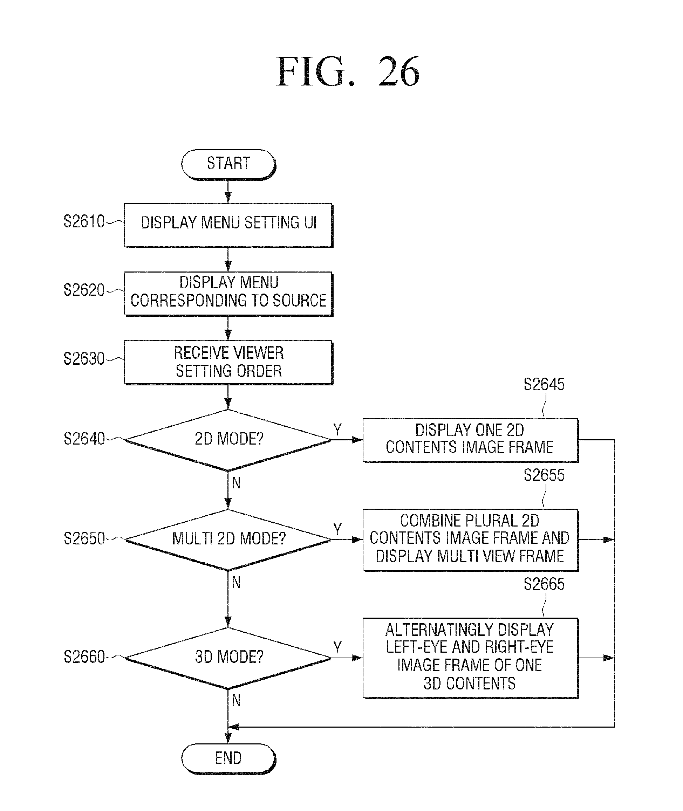

The menu setting UI may include a source selection menu which includes at least one item relating to determining the contents source. Referring also to FIG. 26, a menu which corresponds to the source selected by using the source selection menu at operation S2620 may be additionally included.

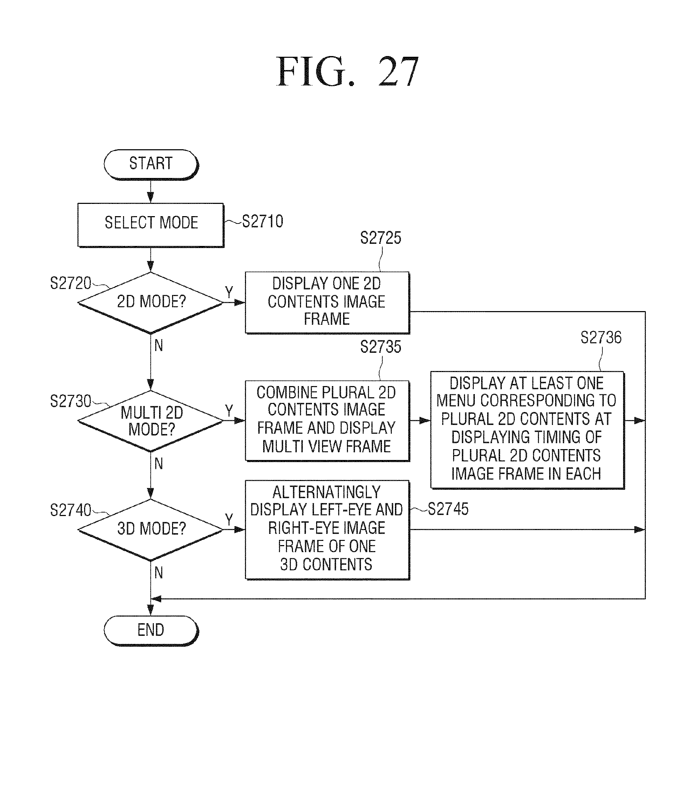

Referring also to FIG. 27, if the multi 2D mode is selected at operation S2730-Y, displaying, in operation S2736, at least one menu which corresponds to a plurality of 2D contents at the displaying timing of the 2D contents image frame may be included. Displaying a notice message which includes information relating to advice to wear the glasses at the displaying timing of the image frame of the plurality of 2D contents may be included.

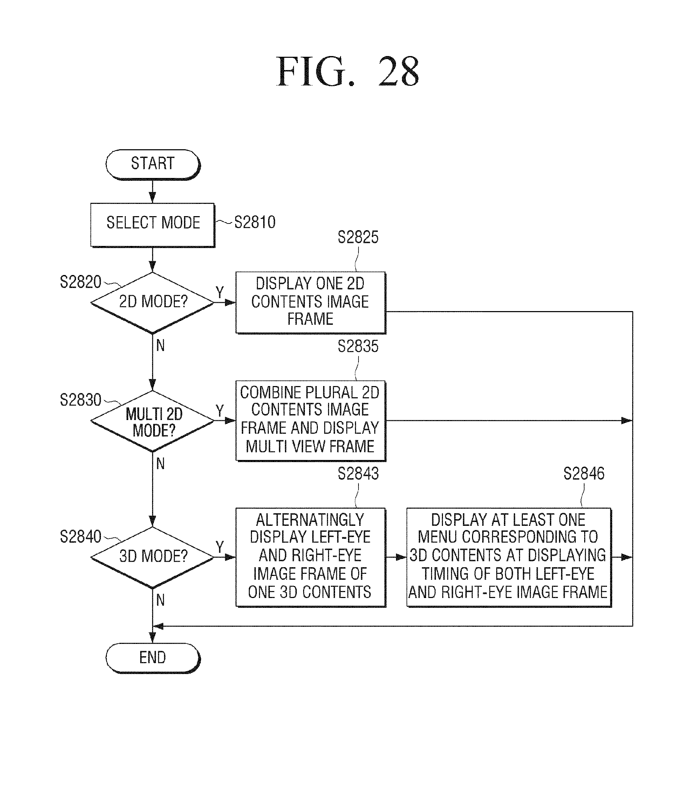

Referring also to FIG. 28, if the 3D mode is selected, the operation S2846 of displaying at least one menu which corresponds to the 3D mode at the displaying timing of both of the left-eye image frame and the right-eye image frame of the 3D contents may be included.

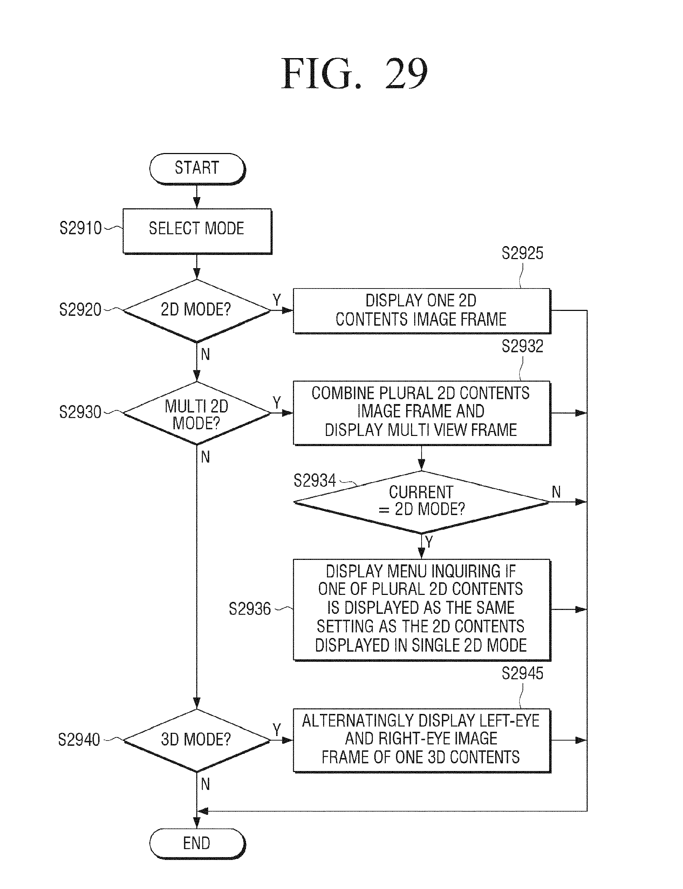

Referring also to FIG. 29, if the multi 2D mode is selected in conjunction with the single 2D mode at operation S2934-Y, the method may additionally include displaying, at operation S2936, the menu which includes at least one item relating to determining whether one of a plurality of 2D contents displayed in the multi 2D mode is displayed by using a same setting as a setting by which the 2D contents are displayed in the single 2D mode.

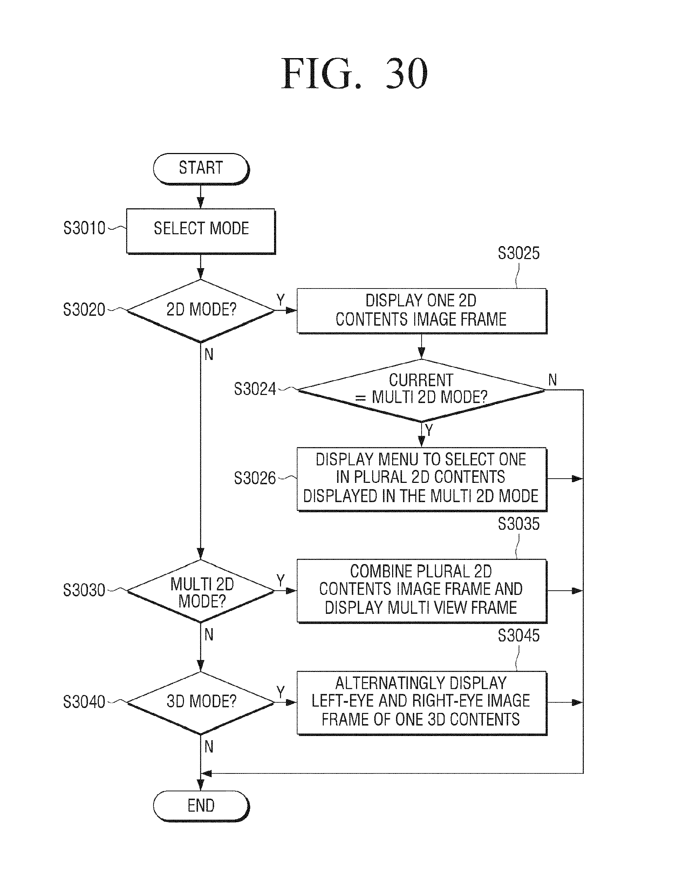

Referring also to FIG. 30, if the single 2D mode or the 3D mode is selected in conjunction with the multi 2D mode at operation S3024-Y, the method may additionally include displaying, at operation S3026, the menu which includes at least one item relating to selecting one of a plurality of 2D contents to be displayed in the multi 2D mode.

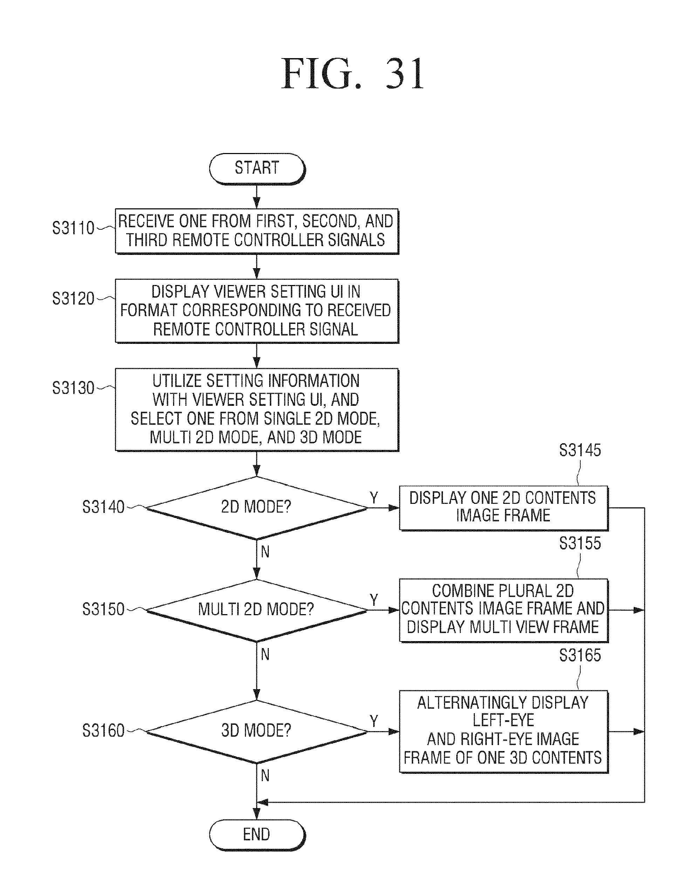

Referring also to FIG. 31, the selecting may include receiving, at operation S3110, one from among a first remote controller signal relating to a selection of the single 2D mode (S-2D button), a second remote controller signal relating to a selection of the multi 2D mode (M-2D button), and a third remote controller signal relating to a selection of the 3D mode (3D button); displaying, at operation S3120, the viewer setting UI in a format which corresponds to the received remote controller signal from among the first, second, and third remote controller signals; and selecting, at operation S3130, the operating mode from among the single 2D mode, the multi 2D mode, and 3D mode by utilizing the setting information generated via the viewer setting UI.

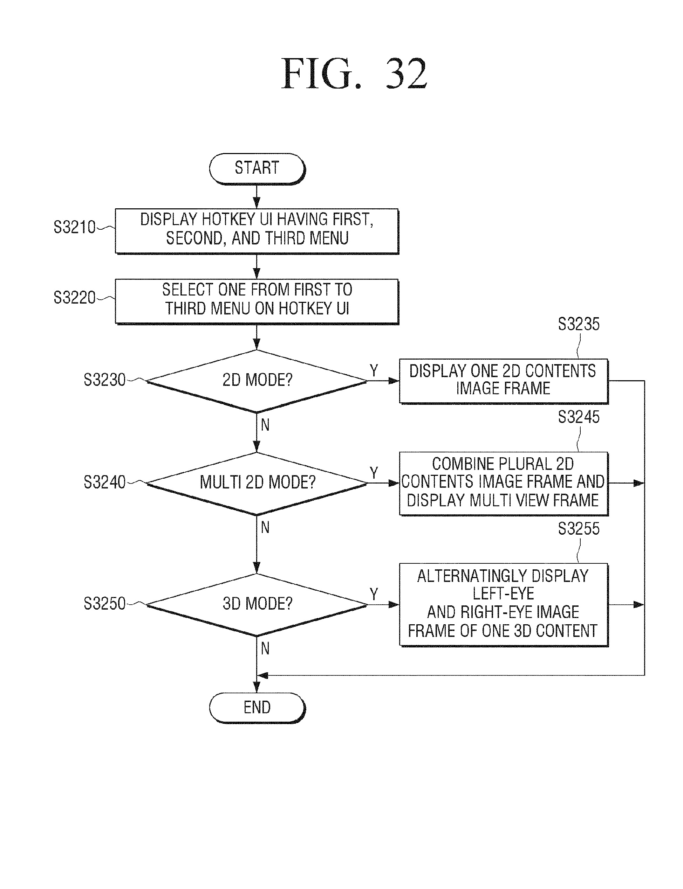

Referring also to FIG. 32, the selecting may include displaying, at operation S3210, a hotkey UI which includes the first menu which relates to the single 2D mode, the second menu which relates to the multi 2D mode, and the third menu which relates to the 3D mode, and selecting, at operation S3220, one of the first menu, the second menu, and the third menu via the hotkey UI.

The selecting may include the displaying at least one menu which corresponds to the selected displaying mode of the contents if one of the first menu, the second menu, and the third menu is selected via the hotkey UI.

Further, a computer program which implements at least one method according to the exemplary embodiments may be stored and utilized by using any one or more of the various types of the recording medium, including a non-transitory recording medium and a transitory recording medium.

In particular, the code for implementing the method may be stored in any one or more of the various types of the recording medium that can be read on the terminal, such as, for example, the Random Access Memory (RAM), the flash memory, the Read Only Memory (ROM), the Erasable Programmable ROM (EPROM), the Electronically Erasable and Programmable ROM (EEPROM), the register, the hard disk, the removable disk, the memory card, the USB memory, and the CD-ROM.

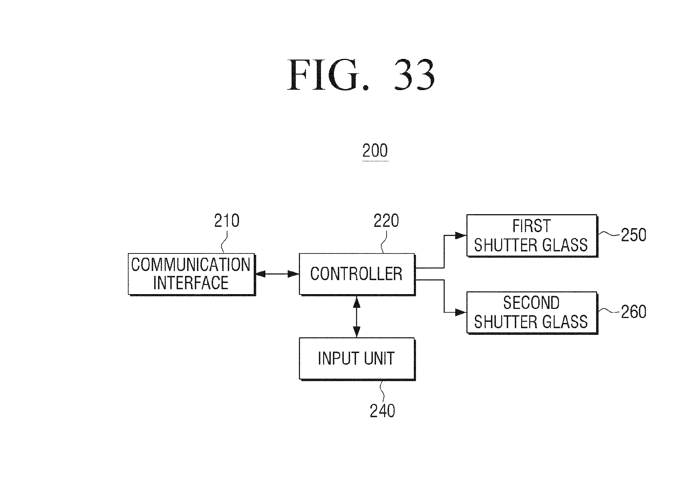

The glasses 200 according to an exemplary embodiment will be described below. FIG. 33 is a block diagram which illustrates the glasses 200 according to an exemplary embodiment.

Referring to FIG. 33, the glasses 200 may operate interactively with the image display apparatus 100, and include a communication interface 210, a controller 220, a first shutter glass 250, a second shutter glass 260, and an input unit 240.

The communication interface 210 may communicate with the image display apparatus and receive a synchronous signal. For instance, if the communication interface 210 includes a Bluetooth communication module, the communication interface 210 may communicate with the image display apparatus 100 by using the Bluetooth communication standard, and receive the transport stream including the synchronous signal. The transport stream may be synchronized with the displaying timing of the contents image frame, and include time information relating to times for opening or closing the first shutter glass 250 and the second shutter glass 260 of the glasses 200. The glasses 200 may open or close the shutter glasses by using the displaying timing of the contents image frame which corresponds to the glasses.

The communication interface 210 may include an IR receiving module, and may receive the synchronous signal as an infrared signal which has a specific frequency. In order to synchronize with the displaying timing of the contents image frame, the glasses 200 may include the time information relating to times for opening or closing the first shutter glass 250 and the second shutter glass 260.

Further, the communication interface 210 may receive information relating to the image frame rate and image frame frequency of each respective set of contents from the image display apparatus 100.

The controller 220 may control the operation of the glasses 200. The controller 220 may transmit the received synchronous signal from the communication interface 210 to a shutter glass driver (not shown), and thereby control the operation of the shutter glass driver. Based on the synchronous signal, the controller 220 may control a generating of a driving signal which is usable for driving the first shutter glass 250 and the second shutter glass 260.

The glasses 200 may further include the shutter glass driver (not illustrated) which is configured for driving the first shutter glass and the second shutter glass.

The shutter glass driver (not illustrated) may generate the driving signal based on the synchronous signal received from the controller 220. In particular, based on the synchronous signal, the shutter glass driver may open the first shutter glass 250 and/or the second shutter glass 260 at the displaying timing of at least one of the 2D contents image frame and the 3D contents image frame in the image display apparatus 100.

The first shutter glass 250 and the second shutter glass 260 may open or close the shutter glass by using the driving signal received from the shutter glass driver. In the multi 2D mode, the first shutter glass 250 and the second shutter glass 260 may open and/or close simultaneously.

Further, in the 3D mode, the first shutter glass 250 and the second shutter glass 260 may open and/or close alternately. By using the driving signal, the first shutter glass 250 may open at the displaying timing of the left-eye image frame in the 3D contents, and the second shutter glass 260 may open at the displaying timing of the right-eye image frame.

The first shutter glass 250 and the second shutter glass 260 may include, for example, a Liquid Crystal Cell (LCC). Based on the driving voltage, the orientation of the LCC may be switched, and the LCC may block or emit the light based on the switched orientation. For instance, the shutter glass driver of the glasses 200 may allow the voltage to be provided to the first shutter glass at the displaying timing of the left-eye image frame of the 3D contents in the 3D mode, and the LCC may be oriented based on the allowed voltage and thereby emit the light. At the same time, the shutter glass driver of the glasses 200 may prevent the voltage from being provided to the second shutter glass, and the LCC may thus be oriented to distract or block the light. Conversely, if the right-eye image frame of the 3D contents is displayed, the operating may be processed in reverse with respect to the above description of displaying the left-eye image frame. The input unit 240 may receive an instruction from a viewer and may transmit the instruction in order to perform at least one of changing the mode and setting at least one parameter relating to the viewing environment.

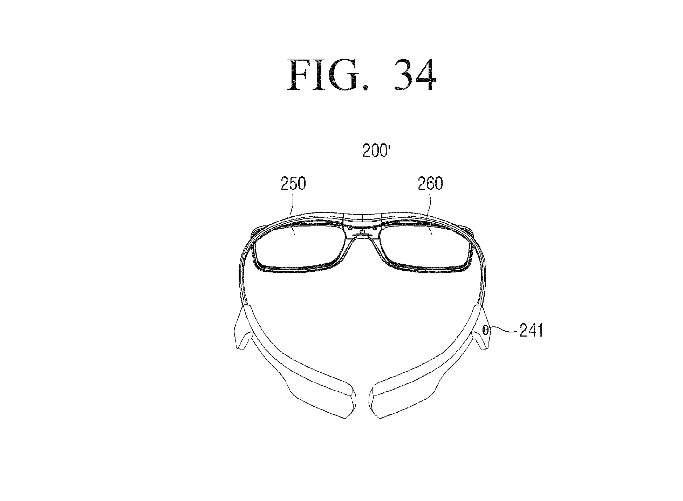

FIG. 34 illustrates the glasses 200', including button 241. Referring to FIG. 34, if one button 241 is included, the mode changing screen or the viewing environment setting screen may be displayed on the display of the image display apparatus 100 by pressing the button 241 for a predetermined amount of time. The button 241 of the glasses 200' may correspond to at least one button of the above-described remote controller 300.

For instance, if the button 241 is pressed shortly after displaying the menu, the menu item may be toggled, and the item to be selected may be highlighted on the display of the image display apparatus 100. While being highlighted, the button 241 may be pressed for an additional interval of time and the selection of the item may be performed.

According to the above exemplary embodiment, the image display apparatus 100 may provide the 2D contents or the 3D contents to each of a plurality of viewers by at least one of the single 2D mode, the multi 2D mode, and the 3D mode. The image display apparatus 100 may display the menu to set each mode. Thus, the viewer may set the viewing environment more conveniently.

The foregoing exemplary embodiments and advantages are merely exemplary and are not to be construed as limiting the present disclosure. The present teaching can be readily applied to other types of apparatuses. Further, the description of the exemplary embodiments of the present inventive concept is intended to be illustrative, and not to limit the scope of the claims, and many alternatives, modifications, and variations will be apparent to those skilled in the art.

## Claims

1. An image display method, comprising:
selecting a mode from among a single two-dimensional 2D mode, a multi 2D mode, and a three-dimensional 3D mode;
displaying an image frame of a first 2D content if the single 2D mode is selected;
combining the respective image frames of each of a plurality of 2D contents and alternately displaying the respective image frames of each of the plurality of 2D contents if the multi 2D mode is selected; and
alternately displaying a left-eye image frame and a right-eye image frame of a first 3D content if the 3D mode is selected.

2. The image display method of claim 1, wherein the selecting comprises:
displaying a setting menu user interface UI including a settable menu; and
receiving an instruction to select one of the single 2D mode, the multi 2D mode, and the 3D mode as the operating mode via the setting menu UI.

3. The image display method of claim 2, wherein the displaying the setting menu UI comprises displaying a plurality of menus which respectively correspond to the plurality of 2D contents in the multi 2D mode.

4. The image display method of claim 3, wherein the plurality of menus are arranged in at least one of a Picture in Picture PIP format, a vertical direction, and a horizontal direction.

5. The image display method of claim 3 or 4, wherein the method further comprises:
displaying each of the plurality of menus corresponding to the plurality of 2D contents within a predetermined area of a screen; and
displaying at least one of an image frame of one of the plurality of 2D contents in the single 2D mode, or displaying respective image frames of each of the plurality of 2D contents on the respective predetermined area of the screen.

6. The image display method of claim 3, 4 or 5, wherein one of the plurality of menus includes a menu inquiring whether the image frame of the first 2D content is to be displayed in the same setting as in the single 2D mode.

7. The image display method of any one of claims 2 to 6, wherein the displaying the setting menu UI comprises displaying a first menu corresponding to any one of the plurality of 2D contents in the multi 2D mode, and displaying a second menu corresponding to another of the plurality of 2D contents if a menu switch input is received.

8. The image display method of any one of claims 2 to 7, wherein the setting menu UI includes a setting menu UI of the 3D mode to set a formatting method of the left-eye image frame and the right-eye image frame of the first 3D content.

9. The image display method of any one of claims 2 to 8, wherein the menu setting UI includes a source selection menu to determine a source of the contents.

10. The image display method of claim 9, further comprising displaying a menu corresponding to the source selected via the source selection menu.

11. The image display method of any one of the preceding claims, wherein, if the multi 2D mode is selected, further comprising displaying at least one menu respectively corresponding to the plurality of 2D contents when displaying the combined image frames of the plurality of 2D contents.

12. The image display method of claim 11, further comprising displaying a notice message to advise to wear glasses when displaying the combined image frames of all of the plurality of 2D contents.

13. The image display method of any one of the preceding claims, wherein, if the 3D mode is selected, further comprising displaying at least one menu corresponding to the 3D mode when displaying both the left-eye image frame and the right-eye image frame of the 3D contents.

14. The image display method of any one of the preceding claims, wherein, if the multi 2D mode is selected in the single 2D mode, further comprising displaying a menu inquiring whether any one of the plurality of 2D contents in the multi 2D mode is to be displayed in the same setting as in the single 2D mode when displaying any one of the plurality of 2D contents in the multi 2D mode.

15. The image display method of any one of the preceding claims, wherein, if one of the single 2D mode or the 3D mode is selected in the multi 2D mode, further comprising displaying a menu to select any one of the plurality of 2D contents displayed in the multi 2D mode.
